(19) Europäisches Patentamt
European Patent Office
Office européen des brevets

(11) **EP 4 183 938 A1**

(12) **EUROPEAN PATENT APPLICATION**
published in accordance with Art. 153(4) EPC

(43) Date of publication:
**24.05.2023 Bulletin 2023/21**

(21) Application number: **21875145.1**

(22) Date of filing: **10.09.2021**

(51) International Patent Classification (IPC):
*E02F 9/20* *(2006.01)*

(52) Cooperative Patent Classification (CPC):
**E02F 9/20**

(86) International application number:
**PCT/JP2021/033395**

(87) International publication number:
**WO 2022/070843 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020165815**

(71) Applicant: **Komatsu Ltd.**
**Minato-ku**
**Tokyo 107-8414 (JP)**

(72) Inventors:
• **OASA, Takahisa**
**Tokyo 107-8414 (JP)**
• **AOSHIMA, Koji**
**Tokyo 107-8414 (JP)**
• **IGARASHI, Yasuhiro**
**Tokyo 107-8414 (JP)**
• **ONODERA, Yoshitaka**
**Tokyo 107-8414 (JP)**
• **KOMATSU, Takehiro**
**Tokyo 107-8414 (JP)**
• **KIKUCHI, Shozo**
**Tokyo 107-8414 (JP)**

(74) Representative: **Flügel Preissner Schober Seidel**
**Patentanwälte PartG mbB**
**Nymphenburger Straße 20**
**80335 München (DE)**

(54) **CONTROL SYSTEM FOR LOADER, LOADER, AND CONTROL METHOD FOR LOADER**

(57)    A control system of a loading machine, having working equipment including a bucket, includes a control device. The control device detects a first surface of an excavated object excavated by the bucket during excavation work, calculates an under-excavation load angle indicating an angle of the first surface with respect to the horizontal plane on the basis of detection data of the first surface, and estimates the weight of the excavated object on the basis of the under-excavation load angle.

EP 4 183 938 A1

# FIG.11

(A)

(B)

**Description**

Field

The present disclosure relates to a control system of a loading machine, the loading machine, and a control method of the loading machine.

Background

In a technical field related to loading machines having working equipment, a loading machine capable of performing efficient excavation operation as disclosed in Patent Literature 1 is known.

Citation List

Patent Literature

Patent Literature 1: JP 2019-203381 A

Summary

Technical Problem

According to a specific work cycle, a loading machine excavates an excavation object with working equipment and then loads the excavated object onto a haul vehicle. When the excavated object is loaded onto the haul vehicle, it is desirable that the loading machine adjust the weight of the excavated object so that an optimum weight for the haul vehicle is loaded.
An object of the present disclosure is to optimize loading work by a loading machine.

Solution to Problem

According to an aspect of the present invention, a control system of a loading machine, the loading machine having working equipment including a bucket, the control system comprises: a control device, wherein the control device detects a first surface of an excavated object excavated by the bucket during excavation work, calculates an under-excavation load angle indicating an angle of the first surface with respect to a horizontal plane on the basis of detection data of the first surface, and estimates a weight of the excavated object on the basis of the under-excavation load angle.

Advantageous Effects of Invention

According to the present disclosure, the loading work by a loading machine can be optimized.

Brief Description of Drawings

FIG. 1 is a side view illustrating a loading machine according to a first embodiment.
FIG. 2 is a perspective view illustrating a bucket according to the first embodiment.
FIG. 3 is a side view schematically illustrating the bucket according to the first embodiment.
FIG. 4 is a diagram for explaining the operation of working equipment according to the first embodiment.
FIG. 5 is a configuration diagram illustrating the loading machine according to the first embodiment.
FIG. 6 is a diagram for explaining a work mode of the loading machine according to the first embodiment.
FIG. 7 is a diagram for explaining excavation work and an excavation object separating operation of the loading machine according to the first embodiment.
FIG. 8 is a diagram for explaining a loading work and loading object separating operation of the loading machine according to the first embodiment.
FIG. 9 is a diagram for explaining an excavated object during excavation work detected by a shape sensor according to the first embodiment.
FIG. 10 is a diagram for explaining the excavated object after the excavation work detected by the shape sensor according to the first embodiment.

FIG. 11 is a diagram for explaining the state of the excavated object held in the bucket according to the first embodiment.

FIG. 12 is a functional block diagram illustrating a control system of the loading machine according to the first embodiment.

FIG. 13 is a block diagram illustrating a control device of the loading machine according to the first embodiment.

FIG. 14 is a diagram for explaining the excavated object during the excavation work according to the first embodiment.

FIG. 15 is a flowchart illustrating a loading machine control method according to the first embodiment.

FIG. 16 is a flowchart illustrating a calibration method according to the first embodiment.

FIG. 17 is a flowchart illustrating an excavation method according to the first embodiment.

FIG. 18 is a functional block diagram illustrating a control system of a loading machine according to a second embodiment.

FIG. 19 is a flowchart illustrating an excavation method according to the second embodiment.

FIG. 20 is a diagram illustrating a modification of the control system of the loading machine according to the second embodiment.

FIG. 21 is a diagram for explaining an excavated object detected by a shape sensor according to a third embodiment.

Description of Embodiments

Hereinafter, embodiments of the present disclosure will be described with reference to the drawings; however, the present disclosure is not limited thereto. Components of the embodiments described below can be combined as appropriate. Meanwhile, some of the components may not be used.

In the embodiments, a local coordinate system is set in a loading machine 1, and a positional relationship of each unit will be described with reference to the local coordinate system. In the local coordinate system, a first axis extending in the left-right direction (vehicle width direction) of the loading machine 1 is defined as an X axis, a second axis extending in the front-rear direction of the loading machine 1 is defined as a Y axis, and a third axis extending in the vertical direction of the loading machine 1 is defined as a Z axis. The X axis and the Y axis are orthogonal to each other. The Y axis and the Z axis are orthogonal to each other. The Z axis and the X axis are orthogonal to each other. The +X direction is a direction in the right, and the -X direction is a direction in the left. The +Y direction is a forward direction, and the -Y direction is a backward direction. The +Z direction is an upward direction, and the -Z direction is a downward direction.

[First Embodiment]

A first embodiment will be described.

<Outline of Loading Machine>

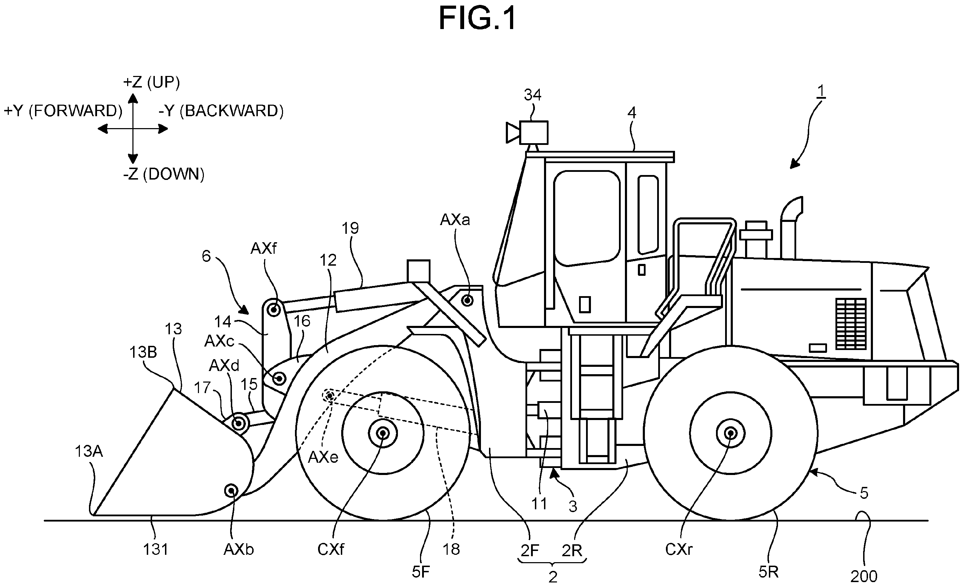

FIG. 1 is a side view illustrating a loading machine 1 according to an embodiment. The loading machine 1 according to the embodiment is, for example, a wheel loader. In the following description, the loading machine 1 is referred to as a wheel loader 1 as appropriate.

As illustrated in FIG. 1, the wheel loader 1 includes a vehicle body 2, an articulated steering mechanism 3, a cab 4, wheels 5, and working equipment 6. The wheel loader 1 travels through a work site by the wheels 5. The wheel loader 1 performs work using the working equipment 6 at a work site. The wheel loader 1 can perform work such as excavation work, loading work, transportation work, and snow removal work using the working equipment 6.

The vehicle body 2 supports the working equipment 6. The vehicle body 2 includes a vehicle body front part 2F and a vehicle body rear part 2R. The vehicle body front part 2F is disposed anterior to the vehicle body rear part 2R. The vehicle body front part 2F and the vehicle body rear part 2R are connected by the articulated steering mechanism 3. The articulated steering mechanism 3 includes an articulation cylinder 11. The articulation cylinder 11 connects the vehicle body front part 2F and the vehicle body rear part 2R. With the articulation cylinder 11 extending and contracting, the vehicle body front part 2F bends in the left-right direction with respect to the vehicle body rear part 2R. With the vehicle body front part 2F bending with respect to the vehicle body rear part 2R, the traveling direction of the wheel loader 1 is adjusted. The articulation cylinder 11 is, for example, a hydraulic cylinder.

The cab 4 is supported by the vehicle body 2. In the embodiment, the cab 4 is disposed above the vehicle body rear part 2R. Inside the cab 4, a seat on which an operator sits and an operation device 25 to be described later are arranged.

The wheels 5 support the vehicle body 2. The wheels 5 include front wheels 5F and rear wheels 5R. The front wheels 5F are arranged anterior to the rear wheels 5R. The front wheels 5F are mounted to the vehicle body front part 2F. The rear wheels 5R are mounted to the vehicle body rear part 2R. Note that in FIG. 1, only the left front wheel 5F and the left rear wheel 5R are illustrated.

In the embodiment, the X axis is parallel to a rotation shaft CXf of the front wheels 5F. The Z axis is orthogonal to the ground contact surface of the front wheels 5F that are in contact with the ground 200. When the wheel loader 1 travels straight, the rotation shaft CXf of the front wheels 5F and a rotation shaft CXr of the rear wheels 5R are parallel to each other.

The working equipment 6 is supported by the vehicle body 2. The working equipment 6 is connected to the vehicle body front part 2F. The working equipment 6 includes a boom 12, a bucket 13, a bellcrank 14, a bucket link 15, a lift cylinder 18, and a bucket cylinder 19.

A proximal end of the boom 12 is rotatably connected to the vehicle body front part 2F. The boom 12 rotates about a rotation shaft AXa with respect to the vehicle body front part 2F. A bracket 16 is fixed to a middle portion of the boom 12.

A proximal end of the bucket 13 is rotatably connected to a distal end of the boom 12. The bucket 13 rotates about a rotation shaft AXb with respect to the boom 12. The bucket 13 is disposed anterior to the front wheels 5F. A bracket 17 is fixed to a part of the bucket 13.

A middle portion of the bellcrank 14 is rotatably connected to the bracket 16 of the boom 12. The bellcrank 14 rotates about a rotation shaft AXc with respect to the bracket 16 of the boom 12. A lower end of the bellcrank 14 is rotatably connected to a proximal end of the bucket link 15.

A distal end of the bucket link 15 is rotatably connected to a bracket 17 of the bucket 13. The bucket link 15 rotates about a rotation shaft AXd with respect to the bracket 17 of the bucket 13. The bellcrank 14 is connected to the bucket 13 via the bucket link 15.

The lift cylinder 18 causes the boom 12 to operate. A proximal end of the lift cylinder 18 is connected to the vehicle body front part 2F. A distal end of the lift cylinder 18 is connected to the boom 12. The boom 12 rotates about a rotation shaft AXe with respect to the lift cylinder 18. The lift cylinder 18 is, for example, a hydraulic cylinder.

The bucket cylinder 19 causes the bucket 13 to operate. A proximal end of the bucket cylinder 19 is connected to the vehicle body front part 2F. A distal end of the bucket cylinder 19 is connected to an upper end of the bellcrank 14. The bellcrank 14 rotates about a rotation shaft AXf with respect to the bucket cylinder 19. The bucket cylinder 19 is, for example, a hydraulic cylinder.

<Bucket>

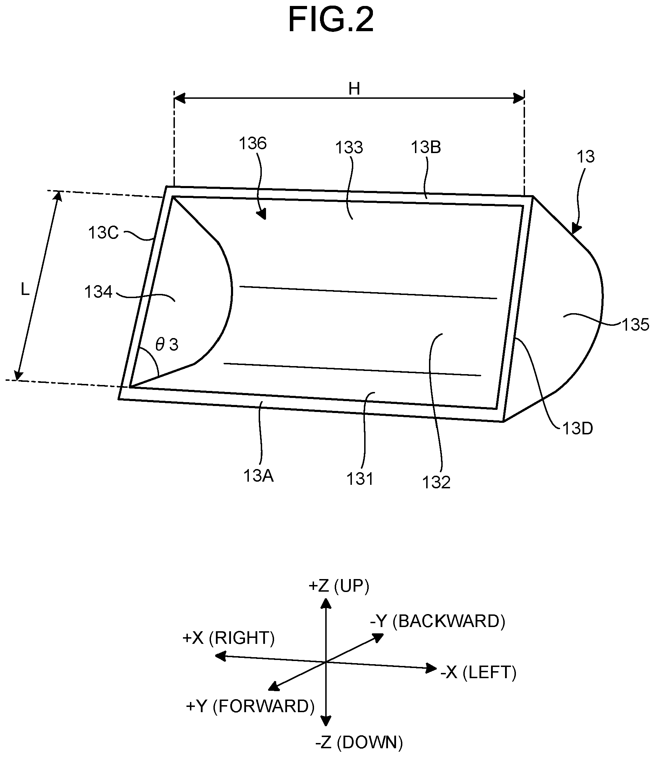

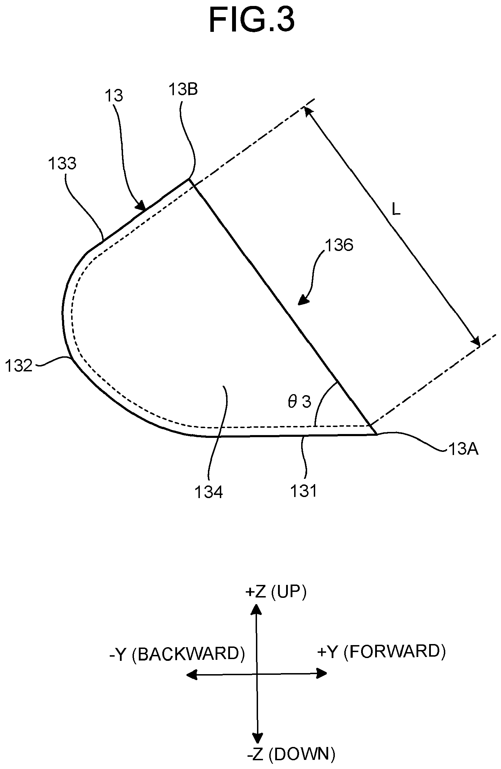

FIG. 2 is a perspective view illustrating the bucket 13 according to the embodiment. FIG. 3 is a side view schematically illustrating the bucket 13 according to the embodiment. The bucket 13 is a work member that excavates an excavation object. The bucket 13 holds an excavated object 300. The bucket 13 includes a bottom plate portion 131, a back plate portion 132, an upper plate portion 133, a right plate portion 134, and a left plate portion 135. A blade tip 13A, which is a lower end, is included at a distal end of the bottom plate portion 131. An upper end 13B is included at a distal end of the upper plate portion 133. A right end 13C is included at a distal end of the right plate portion 134. A left end 13D is included at a distal end of the left plate portion 135. The blade tip 13A extends in the left-right direction. The upper end 13B extends in the left-right direction. The right end 13C extends in the vertical direction or the front-rear direction. The left end 13D extends in the vertical direction or the front-rear direction. In the embodiment, the blade tip 13A and the upper end 13B are parallel to each other. The right end 13C and the left end 13D are parallel to each other. An opening 136 of the bucket 13 is defined between the blade tip 13A, the upper end 13B, the right end 13C, and the left end 13D. The opening 136 of the bucket 13 is defined by the blade tip 13A, the upper end 13B facing the blade tip 13A, the right end 13C, and the left end 13D facing the right end 13C. A blade edge or a blade is attached to the blade tip 13A.

In the embodiment, the dimensions of the opening 136 in the vertical direction or the front-rear direction, that is, a dimension of a straight line connecting the blade tip 13A and the upper end 13B on a YZ plane is defined as a length L. The dimension of the opening 136 in the left-right direction is defined as a width H. An angle formed by the inner surface of the bottom plate portion 131 and a straight line connecting the blade tip 13A and the upper end 13B on the YZ plane is defined as an opening angle $\theta 3$.

<Operation of Working Equipment>

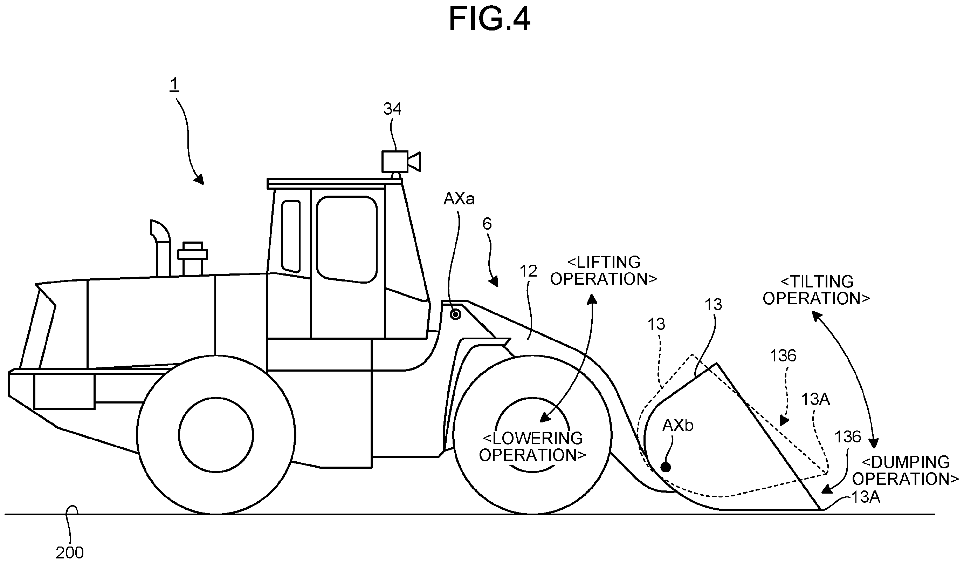

FIG. 4 is a diagram for explaining the operation of the working equipment 6 according to the embodiment. In the embodiment, the working equipment 6 is front-loading type working equipment in which the opening 136 of the bucket 13 faces forward in excavation work. With the lift cylinder 18 extending and contracting, the boom 12 performs lifting operation or lowering operation. With the bucket cylinder 19 extending and contracting, the bucket 13 performs tilting operation or dumping operation.

The lifting operation of the boom 12 refers to operation in which the boom 12 rotates about the rotation shaft AXa so that the distal end of the boom 12 is separated from the ground 200. The lowering operation of the boom 12 refers to operation in which the boom 12 rotates about the rotation shaft AXa so that the distal end of the boom 12 approaches the ground 200.

When the lift cylinder 18 extends, the boom 12 performs the lifting operation. When the lift cylinder 18 contracts, the boom 12 performs the lowering operation.

The tilting operation of the bucket 13 refers to operation in which the bucket 13 rotates about the rotation shaft AXb so that the opening 136 of the bucket 13 faces upward and the blade tip 13A is separated from the ground 200. The dumping operation of the bucket 13 refers to operation in which the bucket 13 rotates about the rotation shaft AXb so that the opening 136 of the bucket 13 faces downward and the blade tip 13A approaches the ground 200.

Specifically, when the bucket cylinder 19 extends, the bellcrank 14 rotates so that the upper end of the bellcrank 14 moves forward and that the lower end of the bellcrank 14 moves backward. When the lower end of the bellcrank 14 moves backward, the bucket 13 is pulled backward by the bucket link 15 and performs the tilting operation. When the bucket cylinder 19 contracts, the bellcrank 14 rotates so that the upper end of the bellcrank 14 moves backward and the lower end of the bellcrank 14 moves forward. When the lower end of the bellcrank 14 moves forward, the bucket 13 is pushed forward by the bucket link 15 and performs the dumping operation.

By causing the bucket 13 to perform the tilting operation, the excavated object 300 can be scooped up by the bucket 13 and held in the bucket 13. By causing the bucket 13 to perform the dumping operation, the excavated object 300 held in the bucket 13 can be discharged from the bucket 13.

<Configuration of Loading Machine>

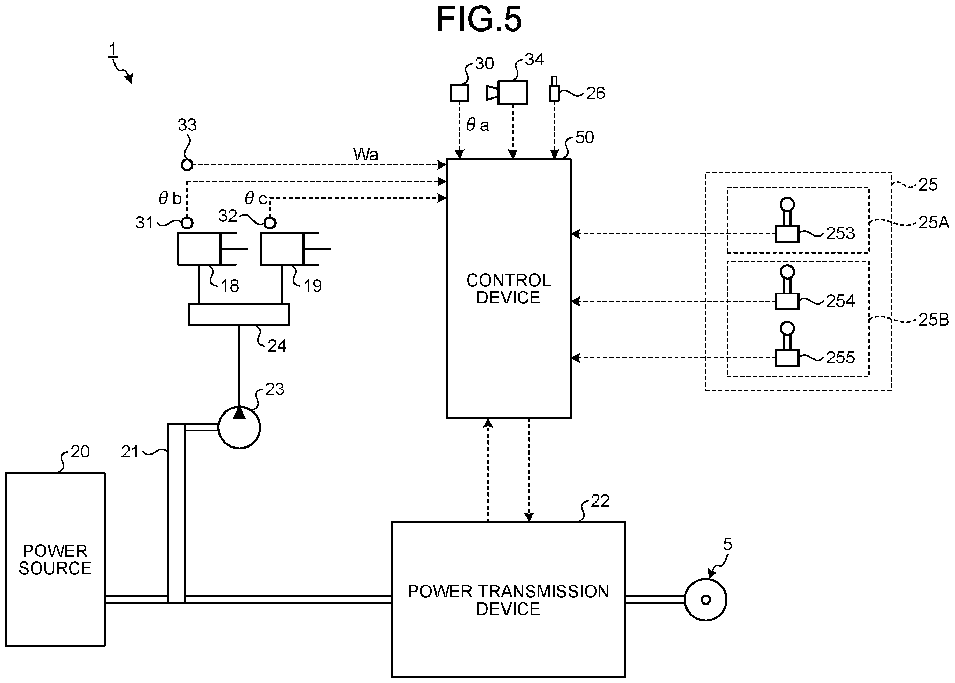

FIG. 5 is a configuration diagram illustrating the wheel loader 1 according to the embodiment. As illustrated in FIG. 5, the wheel loader 1 includes a power source 20, a power take off (PTO) 21, a power transmission device 22, a hydraulic pump 23, a control valve 24, an operation device 25, and a control device 50.

The power source 20 is, for example, a diesel engine.

The PTO 21 transmits at least a part of the driving force of the power source 20 to the hydraulic pump 23. The PTO 21 distributes the driving force of the power source 20 to the power transmission device 22 and the hydraulic pump 23.

The power transmission device 22 transmits the driving force of the power source 20 to the wheels 5. The power transmission device 22 controls a speed range and a traveling direction of the wheel loader 1. The power transmission device 22 may be, for example, a hydro static transmission (HST) or a hydraulic mechanical transmission (HMT). The power transmission device 22 may be, for example, a transmission including a torque converter or a transmission including a plurality of transmission gears.

The hydraulic pump 23 is driven by the power source 20 and discharges hydraulic oil. At least a part of the hydraulic oil discharged from the hydraulic pump 23 is supplied to the articulation cylinder 11. At least a part of the hydraulic oil discharged from the hydraulic pump 23 is supplied to each of the lift cylinder 18 and the bucket cylinder 19 via the control valve 24. The control valve 24 controls the flow rate and the direction of the hydraulic oil supplied from the hydraulic pump 23 to each of the lift cylinder 18 and the bucket cylinder 19. Each of the articulated steering mechanism 3 and the working equipment 6 operates with the hydraulic oil from the hydraulic pump 23.

The operation device 25 is disposed inside the cab 4. The operation device 25 is operated by an operator. The operation device 25 includes a drive system operation device 25A and a working equipment operation device 25B.

The drive system operation device 25A generates an operation signal for operating one or both of the power source 20 and the power transmission device 22. The operator operates the drive system operation device 25A to cause the power transmission device 22 to operate. The drive system operation device 25A includes, for example, a forward-reverse operation device 253.

The forward-reverse operation device 253 is operated, for example, to switch between forward traveling and backward traveling of the wheel loader 1. The control device 50 controls the power transmission device 22 on the basis of an operation signal generated by the forward-reverse operation device 253. With the power transmission device 22 controlled, forward traveling and backward traveling of the wheel loader 1 are switched.

The working equipment operation device 25B generates an operation signal for causing the working equipment 6 to operate. The operator causes the working equipment 6 to operate by operating the working equipment operation device 25B. The working equipment operation device 25B includes a boom operation unit 254 and a bucket operation unit 255.

The boom operation unit 254 is operated in order to cause the boom 12 to operate. The control device 50 controls the control valve 24 on the basis of the operation signal generated by the boom operation unit 254. With the control valve 24 controlled, the lift cylinder 18 is driven, and the boom 12 operates.

The bucket operation unit 255 is operated in order to cause the bucket 13 to operate. The control device 50 controls the control valve 24 on the basis of the operation signal generated by the bucket operation unit 255. With the control valve 24 controlled, the bucket cylinder 19 is driven, and the bucket 13 operates.

The wheel loader 1 further includes an inclination sensor 30, a boom angle sensor 31, a bucket angle sensor 32, a weight measuring device 33, and a shape sensor 34.

The inclination sensor 30 detects the inclination of the vehicle body 2. More specifically, the inclination sensor 30 detects a vehicle body inclination angle $\theta a$ indicating the inclination angle of the vehicle body 2 with respect to the horizontal plane. The inclination sensor 30 is disposed at at least a part of the vehicle body 2. An example of the inclination sensor 30 is an inertial measurement unit (IMU). Detection data of the vehicle body inclination angle $\theta a$ detected by the inclination sensor 30 is transmitted to the control device 50.

The boom angle sensor 31 detects the angle of the boom 12. More specifically, the boom angle sensor 31 detects a boom angle $\theta b$ indicating the angle of the boom 12 with respect to the vehicle body 2 in the local coordinate system. An example of the boom angle sensor 31 is an angle sensor disposed at the connection portion between the vehicle body front part 2F and the boom 12. In the embodiment, the boom angle $\theta b$ is an angle formed by a line connecting the rotation shaft AXa and the rotation shaft AXb and a line connecting the rotation shaft CXf and the rotation shaft CXr. Detection data of the boom angle $\theta b$ detected by the boom angle sensor 31 is transmitted to the control device 50. Note that the boom angle sensor 31 may be a stroke sensor that detects a stroke of the lift cylinder 18.

The bucket angle sensor 32 detects the angle of the bucket 13. More specifically, the bucket angle sensor 32 detects a bellcrank angle $\theta c$ indicating the angle of the bellcrank 14 with respect to the boom 12 in the local coordinate system. An example of the bucket angle sensor 32 is an angle sensor disposed at the connection portion between the boom 12 and the bellcrank 14. In the embodiment, the bellcrank angle $\theta c$ is an angle formed by a line connecting the rotation shaft AXc and the rotation shaft AXf and the line connecting the rotation shaft AXa and the rotation shaft AXb. The angle of the bucket 13 with respect to the boom 12 in the local coordinate system corresponds to the bellcrank angle $\theta c$ on a one-to-one basis. The angle of the bucket 13 with respect to the boom 12 in the local coordinate system is detected by detecting the bellcrank angle $\theta c$. Detection data of the bellcrank angle $\theta c$ detected by the bucket angle sensor 32 is transmitted to the control device 50. Note that the bucket angle sensor 32 may be a stroke sensor that detects a stroke of the bucket cylinder 19.

The weight measuring device 33 measures a weight Wa of the excavated object 300 held in the bucket 13. Examples of the weight measuring device 33 include a pressure sensor that detects the pressure of the hydraulic oil in the lift cylinder 18 or a pressure sensor that detects the pressure of the hydraulic oil in the bucket cylinder 19. A load applied to the working equipment 6 varies between a state in which the excavated object 300 is held in the bucket and a state in which the excavated object 300 is not held in the bucket 13. The weight measuring device 33 can measure the presence or absence of the excavated object 300 in the bucket 13 and the weight Wa of the excavated object 300 held in the bucket 13 by detecting a change in the load applied to the working equipment 6. Measurement data of the weight Wa of the excavated object 300 measured by the weight measuring device 33 is transmitted to the control device 50. Note that the weight measuring device 33 may be a load meter disposed at at least a part of the working equipment 6. The weight measuring device 33 may directly measure the weight Wa of the excavated object 300.

The shape sensor 34 detects the shape of a detection target ahead of the vehicle body 2. The shape sensor 34 is mounted on the wheel loader 1. As illustrated in FIGS. 1 and 4, the shape sensor 34 is disposed at an upper portion of the cab 4. Note that the shape sensor 34 may be disposed at the vehicle body front part 2F. The shape sensor 34 is a non-contact sensor that detects the shape of a detection target in a non-contact manner with the detection target. The shape sensor 34 may be an optical sensor or a camera. Examples of the shape sensor 34 include a laser sensor (light detection and ranging (LIDAR)) that detects a detection target by emitting laser light, a radar sensor (radio detection and ranging (RADAR)) that detects a detection target by emitting radio waves, an infrared sensor that detects a detection target by emitting infrared light, a monocular camera, and a stereo camera.

<Work Mode of Loading Machine>

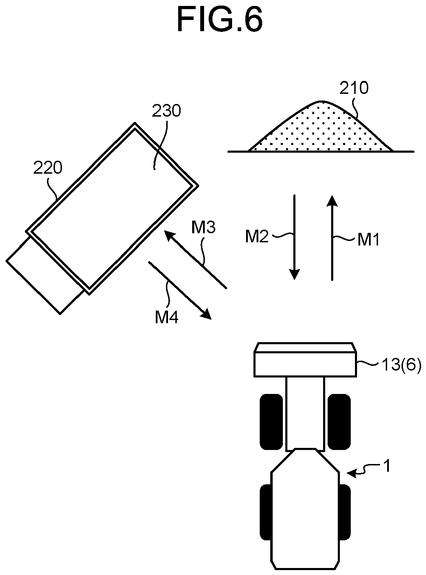

FIG. 6 is a diagram for explaining a work mode of the wheel loader 1 according to the embodiment. The wheel loader 1 works in a plurality of work modes. The work modes of the wheel loader 1 include excavation work M1, excavation object separating operation M2, loading work M3, and loading object separating operation M4.

The excavation work M1 is a work mode in which the wheel loader 1 travels forward to approach the excavation object and excavates the excavation object with the bucket 13. In the embodiment, the excavation object is natural ground 210 placed on the ground 200. The natural ground 210 refers to a mountain including the earth and sand. In the excavation work M1, the wheel loader 1 travels forward so as to approach the natural ground 210 and excavates the natural ground 210 with the bucket 13.

The excavation object separating operation M2 is a work mode in which the wheel loader 1 travels backward so as to be separated from the excavation object while holding the excavated object 300 is in the bucket 13. After completion of the excavation work M1, the wheel loader 1 travels backward so as to be separated from the natural ground 210 while holding the excavated object 300 in the bucket 13.

The loading work M3 is a work mode in which the wheel loader 1 travels forward so as to approach a loading object and loads the excavated object 300 held in the bucket 13 onto the loading object. In the embodiment, the loading object is a dump truck body 230 of a haul vehicle 220 capable of traveling on the ground 200. An example of the haul vehicle 220 is a dump truck. After completion of the excavation object separating operation M2, the wheel loader 1 travels forward while turning so as to approach the haul vehicle 220 and discharges the excavated object 300 from the bucket 13 to load the excavated object 300 onto the dump truck body 230.

The loading object separating operation M4 is a work mode in which the wheel loader 1 travels backward so as to be separated from the loading object. After completion of the loading work M3, the wheel loader 1 travels backward so as to be separated from the haul vehicle 220.

The wheel loader 1 repeats the excavation work M1, the excavation object separating operation M2, the loading work M3, and the loading object separating operation M4 until the excavated object 300 is loaded onto the haul vehicle 220 with a target load weight Tr.

In the excavation work M1, the working equipment 6 operates in an automatic excavation mode or by manual excavation operation. In the automatic excavation mode, the working equipment 6 operates on the basis of a control command output from the control device 50 without depending on the operation of the working equipment operation device 25B. In manual excavation operation, the working equipment 6 operates on the basis of an operation signal generated with the operator operating the working equipment operation device 25B. The present embodiment is based on the premise that the working equipment 6 operates in the automatic excavation mode.

<Excavation Work and Excavation Object Separating Operation>

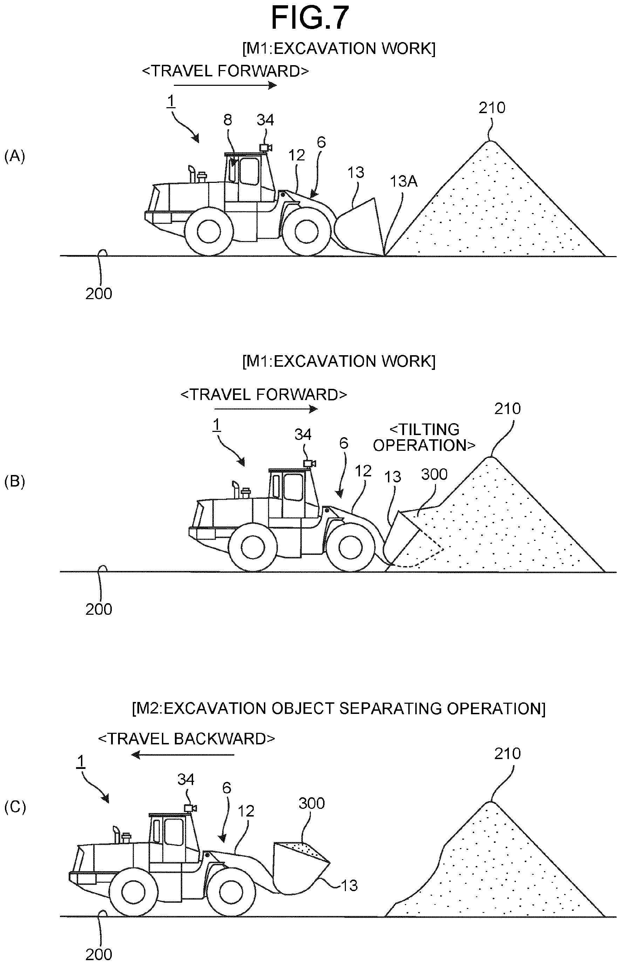

FIG. 7 is a diagram for explaining the excavation work M1 and the excavation object separating operation M2 of the wheel loader 1 according to the embodiment. In each of FIGS. 7(A) and 7(B), the excavation work M1 is illustrated. In FIG. 7(C), the excavation object separating operation M2 is illustrated.

As illustrated in FIG. 7(A), in the excavation work M1, the operator operates the drive system operation device 25A and causes the wheel loader 1 to travel forward so as to approach the natural ground 210. When the wheel loader 1 is caused to travel forward, the operator operates the working equipment operation device 25B to control the attitude of the working equipment 6 so that the natural ground 210 is excavated by the bucket 13. More specifically, the operator operates the working equipment operation device 25B to control the attitude of the working equipment 6 so that the blade tip 13A of the bucket 13 approaches the ground 200. With the wheel loader 1 traveling forward in a state in which the blade tip 13A is approaching the ground 200, the blade tip 13A of the bucket 13 is inserted into a lower end of the natural ground 210.

As illustrated in FIG. 7(B), after the blade tip 13A of the bucket 13 is inserted into the natural ground 210, the control device 50 causes the bucket 13 to perform the tilting operation. As a result, the natural ground 210 is excavated by the bucket 13. The bucket 13 scoops up the excavated object 300. The excavated object 300 is held in the bucket 13.

As illustrated in FIG. 7(C), in the excavation object separating operation M2, the operator operates the drive system operation device 25A to cause the wheel loader 1 to travel backward so that the wheel loader 1 is separated from the natural ground 210. The control device 50 controls the attitude of the working equipment 6 so that the excavated object 300 does not spill from the bucket 13.

<Loading Work and Loading Object Separating Operation>

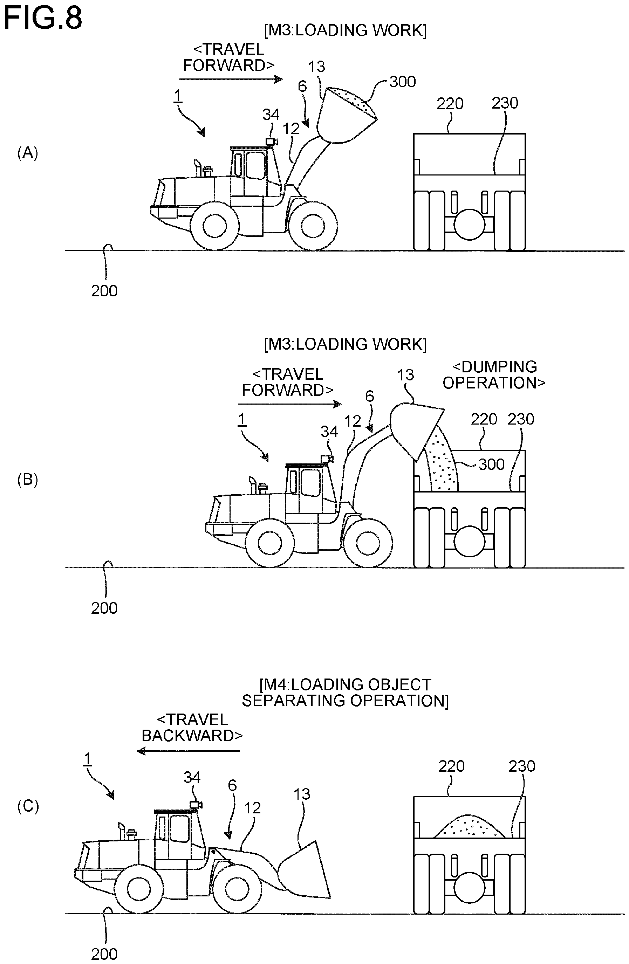

FIG. 8 is a diagram for explaining the loading work M3 and the loading object separating operation M4 of the wheel loader 1 according to the embodiment. In each of FIGS. 8(A) and 8(B), the loading work M3 is illustrated. In FIG. 8(C), the loading object separating operation M4 is illustrated.

As illustrated in FIG. 8(A), in the loading work M3, the operator operates the drive system operation device 25A and causes the wheel loader 1 to travel forward so as to approach the haul vehicle 220. The control device 50 controls the attitude of the working equipment 6 so that the excavated object 300 held in the bucket 13 is loaded onto the dump truck body 230 of the haul vehicle 220. The control device 50 controls the attitude of the working equipment 6 so that the excavated object 300 does not spill from the bucket 13 and that the bucket 13 is positioned above an upper end of the dump truck body 230. Note that the attitude of the working equipment 6 at the time of loading the excavated object 300 held in the bucket 13 may be controlled by the operation of the working equipment operation device 25B.

As illustrated in FIG. 8(B), after the bucket 13 is positioned above the dump truck body 230, the control device 50 causes the bucket 13 to perform the dumping operation. As a result, the excavated object 300 is discharged from the bucket 13. The excavated object 300 is loaded onto the dump truck body 230. The dumping operation of the bucket 13 may be controlled by the operation of the working equipment operation device 25B.

As illustrated in FIG. 8(C), in the loading object separating operation M4, the operator operates the drive system operation device 25A to cause the wheel loader 1 to travel backward so that the wheel loader 1 is separated from the haul vehicle 220.

<Detection of Excavated Object During and After Excavation Work>

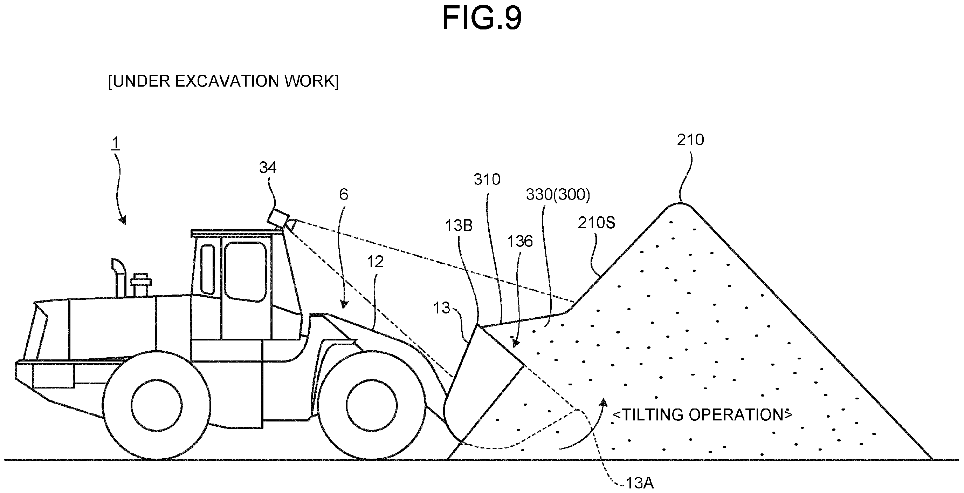

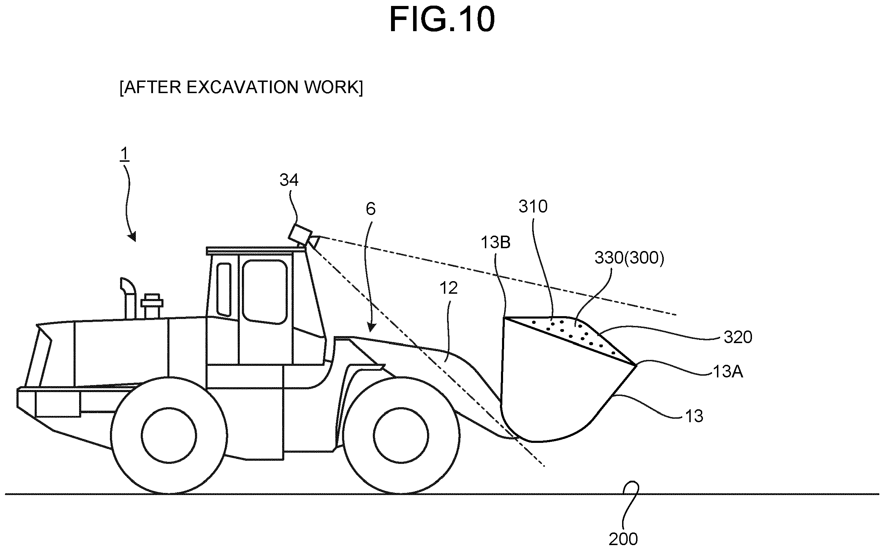

FIG. 9 is a diagram for explaining the excavated object 300 during excavation work detected by the shape sensor 34 according to the embodiment. FIG. 10 is a diagram illustrating the excavated object 300 after the excavation work detected by the shape sensor 34 according to the embodiment. In the embodiment, the shape sensor 34 detects the shape of the surface of the excavated object 300 excavated by the bucket 13. The excavated object 300 refers to a part of the natural ground 210 separated from the natural ground 210 by the bucket 13.

The shape sensor 34 can detect the shape of the surface of the excavated object 300 both during and after the excavation work of the natural ground 210 by the bucket 13. As illustrated in FIG. 9, the state of being during the excavation work of the natural ground 210 by the bucket 13 refers to a period in which the bucket 13 is performing the tilting operation in a state in which at least a part of the bucket 13 is inserted in the natural ground 210. As illustrated in FIG. 10, the state of being after the excavation work of the natural ground 210 by the bucket 13 refers to a period in which the bucket 13 and the excavated object 300 are positioned outside a surface 210S of the natural ground 210 while the bucket 13 holds the excavated object 300.

As illustrated in FIGS. 9 and 10, with the bucket 13 excavating the natural ground 210, at least a part of the excavated object 300 is positioned outside the bucket 13 with respect to the opening 136. In the following description, the excavated object 300 positioned outside the bucket 13 with respect to the opening 136 is referred to as an exposed portion 330 of the excavated object 300 as appropriate.

As illustrated in FIG. 9, during the excavation work, a part of the surface of the excavated object 300 is positioned outside the surface 210S of the natural ground 210. The shape sensor 34 detects the shape of the part of the surface of the excavated object 300 positioned outside the surface 210S of the natural ground 210 during the excavation work of the natural ground 210 by the bucket 13.

During the excavation work, the part of the surface of the excavated object 300 positioned outside the surface 210S of the natural ground 210 is inclined upward and forward from the upper end 13B of the bucket 13. In the following description, the part of the surface of the excavated object 300 inclined upward and forward from the upper end 13B is referred to as a first surface 310 as appropriate.

During the excavation work, the first surface 310 is positioned outside the surface 210S of the natural ground 210. The first surface 310 is a part of the surface of the exposed portion 330. The first surface 310 is formed in such a manner as to be continuous with the upper end 13B. During the excavation work, the shape sensor 34 detects the shape of the first surface 310.

As illustrated in FIG. 10, after the excavation work, the entire surface of the excavated object 300 is positioned outside the surface 210S of the natural ground 210. The shape sensor 34 detects the shape of the surface of the excavated object 300 positioned outside the surface 210S of the natural ground 210 after the excavation work of the natural ground 210 by the bucket 13.

After the excavation work, a part of the surface of the excavated object 300 positioned outside the surface 210S of the natural ground 210 is inclined upward and backward from the blade tip 13A of the bucket 13. In the following description, the part of the surface of the excavated object 300 inclined upward and backward from the blade tip 13A is referred to as a second surface 320 as appropriate.

Even after the excavation work, the first surface 310 is formed on a part of the surface of the excavated object 300.

After the excavation work, each of the first surface 310 and the second surface 320 is positioned outside the surface 210S of the natural ground 210. Each of the first surface 310 and the second surface 320 is a part of the surface of the exposed portion 330. The first surface 310 is formed in such a manner as to be continuous with the upper end 13B. The second surface 320 is formed in such a manner as to be continuous with the blade tip 13A. After the excavation work, the shape sensor 34 detects each of the shape of the first surface 310 and the shape of the second surface 320.

In the following description, the excavated object 300 held in the bucket 13 during the excavation work is referred to as an under-excavation-work excavated object 300 as appropriate, and the excavated object 300 held in the bucket 13 after the excavation work is referred to as a post-excavation-work excavated object 300 as appropriate. The surface of the excavated object 300 during the excavation work includes the first surface 310 but does not include the second surface 320. The surface of the excavated object 300 after the excavation work includes both the first surface 310 and the second surface 320.

<State of Excavated Object Held in Bucket>

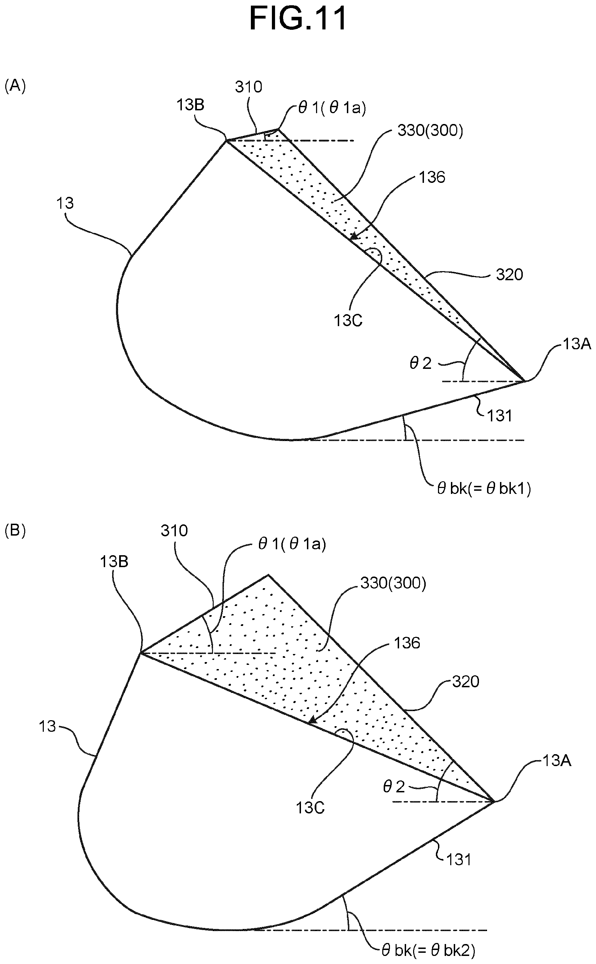

FIG. 11 is a diagram for explaining the state of the excavated object 300 held in the bucket 13 according to the embodiment. In FIG. 11, the excavated object 300 after the excavation work is illustrated. As illustrated in FIG. 11, the exposed portion 330 is formed in such a manner as to protrude from the opening 136 to the outside of the bucket 13.

The surface of the exposed portion 330 includes the first surface 310 and the second surface 320. The second surface 320 is disposed anterior to the first surface 310. The first surface 310 is inclined upward and forward. The second surface 320 is inclined downward and forward. A rear end of the first surface 310 is connected to the upper end 13B. A front end of the second surface 320 is connected to the blade tip 13A. A front end of the first surface 310 and a rear end of the second surface 320 are connected. In a cross section orthogonal to the rotation shaft AXb, a triangle is substantially formed by the first surface 310, the second surface 320, and the right end 13C (left end 13D).

In the bucket 13 illustrated in FIG. 11(A) and the bucket 13 in FIG. 11(B), the bucket angle $\theta$bk indicating the angle of the bottom plate portion 131 with respect to the horizontal plane is different. In FIG. 11(A), illustrated is an example in which the bucket angle $\theta$bk is the first angle $\theta$bk1. In FIG. 11(B), illustrated is an example in which the bucket angle $\theta$bk is a second angle $\theta$bk2 that is larger than the first angle $\theta$bk1.

In the embodiment, the angle of the first surface 310 with respect to the horizontal plane is referred to as a load angle $\Theta$1 as appropriate. In addition, the load angle $\Theta$1 of the excavated object 300 during the excavation work is referred to as an under-excavation load angle $\theta$1d as appropriate, and the load angle $\Theta$1 of the excavated object 300 after the excavation work is referred to as a post-excavation load angle $\theta$1a as appropriate. In FIG. 11, the load angle $\Theta$1 indicates the post-excavation load angle $\theta$1a.

As illustrated in FIG. 11, when the bucket angle $\theta$bk changes, the load angle $\Theta$1 changes. As the bucket angle $\theta$bk increases, the load angle $\Theta$1 increases. As the bucket angle $\theta$bk decreases, the load angle $\Theta$1 decreases. When the bucket angle $\theta$bk changes in each of the excavated object 300 during the excavation work and the excavated object 300 after the excavation work, the load angle $\Theta$1 changes. That is, each of the under-excavation load angle $\theta$1d and the post-excavation load angle $\theta$1a changes due to the change in the bucket angle $\theta$bk.

The angle of the second surface 320 with respect to the horizontal plane indicates an angle of repose $\Theta$2 (stop repose angle) of the excavated object 300.

As illustrated in FIG. 11, even when the bucket angle $\theta$bk changes, the angle of repose $\Theta$2 does not substantially change. The angle of repose $\Theta$2 is uniquely determined on the basis of the property of the excavated object 300 (natural ground 210). In a case where the property of the excavated object 300 is constant, the angle of repose $\Theta$2 does not substantially change even when the bucket angle $\theta$bk changes.

The present inventors have found that, when the bucket angle $\theta$bk changes, the load angle $\Theta$1 on the upper end 13B side changes, and the angle of repose $\Theta$2 is formed on the blade tip 13A side.

During the excavation work, the bucket 13 changes the bucket angle $\theta$bk in a state in which the blade tip 13A is inserted into the natural ground 210. At least a part of the first surface 310 is formed by the surface 210S of the natural ground 210. When the bucket angle $\theta$bk changes in a state in which the blade tip 13A is inserted in the natural ground 210, the surface 210S of the natural ground 210 moves, and the angle of the first surface 310 which is the surface of the excavated object 300 on the upper end 13B side changes. Therefore, it is considered that the load angle $\Theta$1 on the upper end 13B side changes when the bucket angle $\theta$bk changes.

After the excavation work, the bucket 13 is removed from the natural ground 210 while holding the excavated object 300. When the bucket 13 is removed from the natural ground 210, at least a part of the excavated object 300 spills from the blade tip 13A by the action of gravity. With at least a part of the excavated object 300 spilled from the blade tip 13A, the second surface 320, which is the surface of the excavated object 300 on the blade tip 13A side, settles at an angle corresponding to the property of the excavated object 300. It is conceived that this results in formation of the angle of repose $\Theta$2 on the blade tip 13A side.

<Control System>

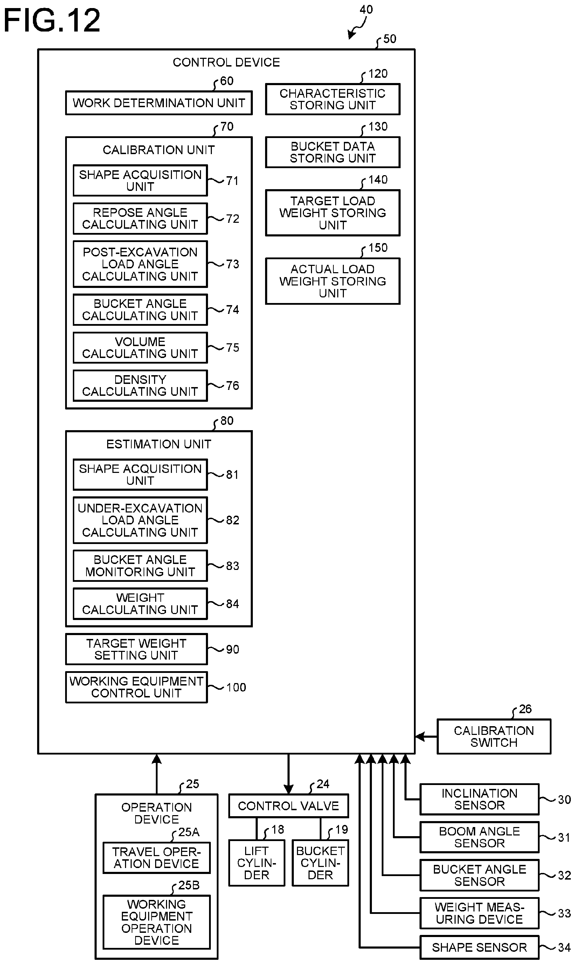

FIG. 12 is a functional block diagram illustrating a control system 40 of the wheel loader 1 according to the embodiment. The control system 40 includes the control device 50, the operation device 25, the control valve 24, the lift cylinder 18, the bucket cylinder 19, the inclination sensor 30, the boom angle sensor 31, the bucket angle sensor 32, the weight measuring device 33, the shape sensor 34, and a calibration switch 26.

The control device 50 includes a computer system. The control device 50 outputs a control command for controlling the wheel loader 1.

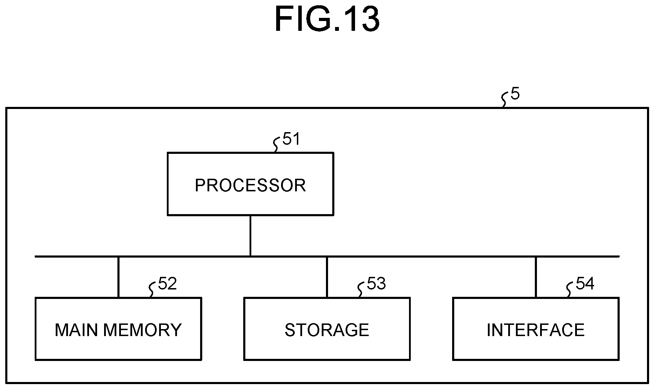

FIG. 13 is a block diagram illustrating the control device 50 of the wheel loader 1 according to the embodiment. As illustrated in FIG. 13, the control device 50 includes a processor 51, a main memory 52, a storage 53, and an interface 54. The processor 51 performs arithmetic processing of the operation of the working equipment 6 by executing a computer program. Examples of the processor 51 include a central processing unit (CPU) and a micro processing unit (MPU). Examples of the main memory 52 include a nonvolatile memory and a volatile memory. An example of the nonvolatile memory is a read only memory (ROM). An example of the volatile memory is a random access memory (RAM). The storage 53 is a non-transitory tangible storage medium. Examples of the storage 53 include a magnetic disk, a magneto-optical disk, a semiconductor memory, and the like. The storage 53 may be an internal medium directly connected to a bus of the control device 50 or an external medium connected to the control device 50 via the interface 54 or a communication line. The storage 53 stores a computer program for controlling the working equipment 6.

As illustrated in FIG. 12, the control device 50 includes a work determination unit 60, a calibration unit 70, an estimation unit 80, a target weight setting unit 90, a working equipment control unit 100, a characteristic storing unit 120, a bucket data storing unit 130, a target load weight storing unit 140, and an actual load weight storing unit 150. The control device 50 communicates with each of the operation device 25, the control valve 24, the inclination sensor 30, the boom angle sensor 31, the bucket angle sensor 32, the weight measuring device 33, the shape sensor 34, and the calibration switch 26.

(Work Determination Unit)

The work determination unit 60 determines whether or not the wheel loader 1 is performing the excavation work on the natural ground 210. The work determination unit 60 determines whether or not the bucket 13 is performing the excavation work on the natural ground 210 on the basis of, for example, the traveling direction and the traction force of the wheel loader 1, the load applied to the working equipment 6, and the attitude of the working equipment 6. The traveling direction of the wheel loader 1 indicates forward traveling or backward traveling of the wheel loader 1. The work determination unit 60 can determine whether or not the wheel loader 1 is traveling forward on the basis of the operation signal of the forward-reverse operation device 253 of the drive system operation device 25A. Note that, in a case where a rotation sensor that detects the rotation direction of the wheels 5 is provided, the work determination unit 60 may determine whether or not the wheel loader 1 is traveling forward on the basis of detection data of the rotation direction of the wheels 5 detected by the rotation sensor. The work determination unit 60 can acquire the traction force of the wheel loader 1. The traction force is, for example, a value calculated on the basis of the output torque of the power source 20, a speed ratio of input and output of the power transmission device 22, and the load radius of the wheels 5. The work determination unit 60 can acquire measurement data of the weight Wa of the excavated object 300 held in the bucket 13 from the weight measuring device 33. The work determination unit 60 can acquire the attitude of the working equipment 6. The attitude of the working equipment 6 includes the boom angle $\theta b$ and the bellcrank angle $\theta c$. The work determination unit 60 can acquire detection data of the boom angle $\theta b$ from the boom angle sensor 31 and detection data of the bellcrank angle $\theta c$ from the bucket angle sensor 32. Note that the traveling direction and the traction force of the wheel loader 1, the load applied to the working equipment 6, and the attitude of the working equipment 6 have been described as examples of elements for determining whether or not the wheel loader 1 is performing the excavation work on the natural ground 210, however, the elements are not limited thereto. The element for determining whether or not the wheel loader 1 is performing the excavation work on the natural ground 210 may include some or all of the above elements.

In a case where the bucket 13 is performing the excavation work on the natural ground 210, the wheel loader 1 travels forward, the blade tip 13A of the bucket 13 is inserted into the natural ground 210, thereby increasing the traction force, the load applied to the working equipment 6 by the excavated object 300 held in the bucket 13 increases, and the bucket 13 performs the tilting operation from the state in which the blade tip 13A is close to the ground 200. Therefore, the work determination unit 60 can determine that the bucket 13 is performing the excavation work on the natural ground 210 on the basis of the traveling direction and the traction force of the wheel loader 1, the load applied to the working equipment 6, and the attitude of the working equipment 6.

In a case where the bucket 13 is performing the excavation work on the natural ground 210, the wheel loader 1 travels backward. Therefore, the work determination unit 60 can determine that the bucket 13 has performed the excavation work on the natural ground 210 on the basis of the traveling direction of the wheel loader 1.

(Calibration unit)

The calibration unit 70 calculates characteristic data of the excavated object 300 on the basis of the excavated object 300 held in the bucket 13 after the excavation work. The characteristic data of the excavated object 300 includes the angle of repose $\Theta2$ of the excavated object 300 and a density $\rho$ of the excavated object 300.

The calibration unit 70 includes a shape acquisition unit 71, a repose angle calculating unit 72, a post-excavation load angle calculating unit 73, a bucket angle calculating unit 74, a volume calculating unit 75, and a density calculating unit 76.

The shape acquisition unit 71 acquires detection data of the shape of the surface of the excavated object 300 after the excavation work detected by the shape sensor 34. The shape acquisition unit 71 can acquire detection data of the shape of the surface of the excavated object 300 after the excavation work on the basis of the determination result of the work determination unit 60.

The repose angle calculating unit 72 calculates the angle of repose $\Theta2$ indicating the angle of the second surface 320 with respect to the horizontal plane of the excavated object 300. The repose angle calculating unit 72 calculates the angle of repose $\Theta2$ on the basis of the detection data of the angle of the vehicle body 2 and the detection data of the second surface 320 of the excavated object 300 acquired by the shape acquisition unit 71. The detection data of the angle of the vehicle body 2 is detection data of the vehicle body inclination angle $\theta a$ of the vehicle body 2 with respect to the horizontal plane detected by the inclination sensor 30. That is, the repose angle calculating unit 72 calculates the angle of repose Θ2 with respect to the horizontal plane on the basis of the detection data of the second surface 320 of the excavated object 300 detected after the excavation work.

The post-excavation load angle calculating unit 73 calculates the post-excavation load angle θ1a indicating the angle of the first surface 310 with respect to the horizontal plane of the excavated object 300 after the excavation work. The post-excavation load angle calculating unit 73 calculates the post-excavation load angle θ1a on the basis of the detection data of the angle of the vehicle body 2 and the detection data of the first surface 310 of the excavated object 300 acquired by the shape acquisition unit 71. That is, the post-excavation load angle calculating unit 73 calculates the post-excavation load angle θ1a with respect to the horizontal plane on the basis of the detection data of the first surface 310 of the excavated object 300 detected after the excavation work.

The bucket angle calculating unit 74 calculates the bucket angle θbk indicating the angle of the bucket 13 after the excavation work with respect to the horizontal plane. The bucket angle calculating unit 74 calculates the bucket angle θbk after the excavation work on the basis of the detection data of the angle of the vehicle body 2 and the detection data of the angle of the working equipment 6. The detection data of the angle of the working equipment 6 includes the detection data of the boom angle θb indicating the angle of the boom 12 in the local coordinate system detected by the boom angle sensor 31 and the detection data of the bellcrank angle θc indicating the angle of the bellcrank 14 in the local coordinate system detected by the bucket angle sensor 32. Therefore, the bucket angle calculating unit 74 can calculate the bucket angle θbk on the basis of the detection data of the vehicle body inclination angle θa, the detection data of the boom angle θb, and the detection data of the bellcrank angle θc.

The volume calculating unit 75 calculates a volume Va of the excavated object 300 after the excavation work. The volume calculating unit 75 calculates the volume Va of the excavated object 300 after the excavation work held in the bucket 13 on the basis of the angle of repose Θ2 calculated by the repose angle calculating unit 72, the post-excavation load angle θ1a calculated by the post-excavation load angle calculating unit 73, the bucket angle θbk calculated by the bucket angle calculating unit 74, and the dimensions of the bucket 13 stored in the bucket data storing unit 130.

A cross-sectional area A1 of the exposed portion 330 orthogonal to the rotation shaft AXb is calculated on the basis of the following Equation (1).

$$A1 = \frac{L^2 \times \sin(\theta 1a + \theta 3 - \theta bk) \times \sin(\theta 2 - \theta 3 + \theta bk)}{2 \times \sin(\theta 1a + \theta 2)} \tag{1}$$

A cross-sectional area A2 of the bucket 13 orthogonal to the rotation shaft AXb is derived from the dimensions of the bucket 13 stored in the bucket data storing unit 130. A cross-sectional area Aa of the excavated object 300 after the excavation work orthogonal to the rotation shaft AXb is calculated on the basis of the following Equation (2).

$$Aa = A1 + A2 \tag{2}$$

The volume Va of the excavated object 300 is calculated on the basis of the following Equation (3).

$$Va = Aa \times H \tag{3}$$

The density calculating unit 76 calculates the density ρ of the excavated object 300 on the basis of the measurement data of the weight Wa, of the excavated object 300 after the excavation work, held in the bucket 13, measured by the weight measuring device 33 and the volume Va, of the excavated object 300 after the excavation work, calculated by the volume calculating unit 75. The density ρ is calculated on the basis of the following Equation (4).

$$\rho = {Wa}/{Va} \tag{4}$$

The characteristic storing unit 120 stores the characteristic data of the excavated object 300 calculated by the calibration unit 70. The characteristic storing unit 120 stores, as characteristic data, the angle of repose $\Theta2$ of the excavated object 300 calculated by the repose angle calculating unit 72 and the density $\rho$ of the excavated object 300 calculated by the density calculating unit 76.

(Estimation Unit)

The estimation unit 80 estimates the weight Wp of the excavated object 300 held in the bucket 13 while the bucket 13 is performing the excavation work on the natural ground 210. The estimation unit 80 estimates the weight Wp of the excavated object 300 after the excavation work on the basis of the detection data of the excavated object 300 during the excavation work detected by the shape sensor 34.

The estimation unit 80 includes a shape acquisition unit 81, an under-excavation load angle calculating unit 82, a bucket angle monitoring unit 83, and a weight calculating unit 84.

The shape acquisition unit 81 acquires detection data of the shape of the surface of the excavated object 300 during the excavation work detected by the shape sensor 34. The shape acquisition unit 81 can acquire the detection data of the shape of the surface of the excavated object 300 during the excavation work on the basis of the determination result of the work determination unit 60.

The under-excavation load angle calculating unit 82 calculates the under-excavation load angle $\theta1d$ indicating the angle of the first surface 310 with respect to the horizontal plane of the excavated object 300 during the excavation work. The under-excavation load angle calculating unit 82 calculates the under-excavation load angle $\theta1d$ on the basis of the detection data of the angle of the vehicle body 2 and the detection data of the first surface 310 of the excavated object 300 acquired by the shape acquisition unit 81. That is, the under-excavation load angle calculating unit 82 calculates the under-excavation load angle $\theta1d$ with respect to the horizontal plane on the basis of the detection data of the first surface 310 of the excavated object 300 detected during the excavation work.

The bucket angle monitoring unit 83 calculates the bucket angle $\theta bk$ indicating the angle of the bucket 13 during the excavation work with respect to the horizontal plane. The bucket angle monitoring unit 83 calculates the bucket angle $\theta bk$ during the excavation work on the basis of the detection data of the angle of the vehicle body 2 and the detection data of the angle of the working equipment 6.

The weight calculating unit 84 calculates the weight Wp of the excavated object 300 on the basis of the under-excavation load angle $\theta1d$ calculated by the under-excavation load angle calculating unit 82. The weight Wp calculated by the weight calculating unit 84 is the weight Wp estimated by the estimation unit 80. The weight calculating unit 84 outputs the calculation result of the weight Wp to the working equipment control unit 100.

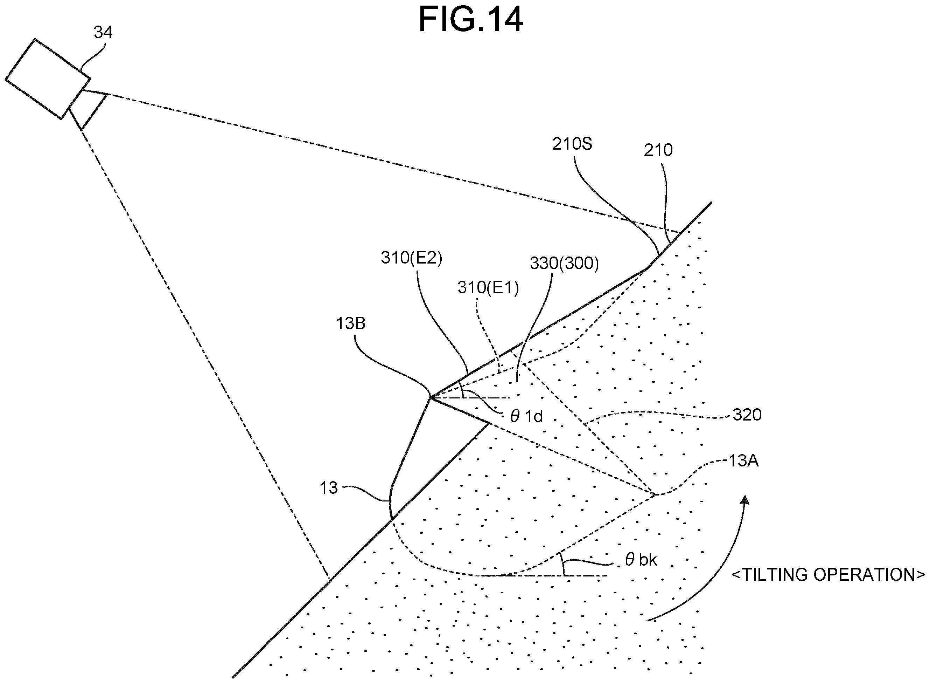

FIG. 14 is a diagram for explaining an excavated object 300 during the excavation work according to the embodiment. As illustrated in FIG. 14, during the excavation work on the natural ground 210 by the bucket 13, a part of the bucket 13 including the blade tip 13A is positioned inside the natural ground 210. During the excavation work on the natural ground 210 by the bucket 13, the first surface 310 of the excavated object 300 is positioned outside the surface 210S of the natural ground 210. Therefore, the shape sensor 34 can detect the first surface 310 of the excavated object 300 while the bucket 13 is performing the excavation work on the natural ground 210. In a case where the bucket angle $\theta bk$ is small, the first surface 310 is formed as indicated by a line E1 in FIG. 14. When the bucket 13 performs the tilting operation and the bucket angle $\theta bk$ gradually increases, the under-excavation load angle $\theta1d$ gradually increases, and the first surface 310 is formed as indicated by a line E2 in FIG. 14.

During the excavation work on the natural ground 210 by the bucket 13, the second surface 320 of the excavated object 300 does not appear outside the surface 210S of the natural ground 210.

The under-excavation load angle calculating unit 82 calculates the under-excavation load angle $\theta1d$ on the basis of the detection data of the first surface 310 of the excavated object 300 during the excavation work detected by the shape sensor 34. The weight calculating unit 84 estimates the weight Wp of the excavated object 300 held in the bucket 13 when the bucket 13 is removed from the natural ground 210 while the under-excavation load angle $\theta1d$ is maintained.

The characteristic data of the excavated object 300 is stored in the characteristic storing unit 120. The bucket angle $\theta bk$ during the excavation work is calculated by the bucket angle monitoring unit 83. The weight calculating unit 84 can calculate the weight Wp on the basis of the under-excavation load angle $\theta1d$ calculated by the under-excavation load angle calculating unit 82 and specific data of the excavated object 300 including the angle of repose $\Theta2$ and the density $\rho$ stored in the characteristic storing unit 120. A cross-sectional area A3 of the exposed portion 330 during the excavation work orthogonal to the rotation shaft AXb is calculated on the basis of the following Equation (5).

$$A3 = \frac{L^2 \times \sin(\theta 1d + \theta 3 - \theta bk) \times \sin(\theta 2 - \theta 3 + \theta bk)}{2 \times \sin(\theta 1d + \theta 2)} \qquad (5)$$

A cross-sectional area Ad of the excavated object 300 during the excavation work orthogonal to the rotation shaft AXb is calculated on the basis of the following Equation (6).

$$Ad = A3 + A2 \qquad (6)$$

The volume Vp of the excavated object 300 is calculated on the basis of the following Equation (7).

$$Vp = Ad \times H \qquad (7)$$

The weight Wp is calculated on the basis of the following Equation (8).

$$Wp = Vp \times \rho \qquad (8)$$

(Target Weight Setting Unit)

The target weight setting unit 90 sets a target weight Wr indicating a target value of the weight Wa of the excavated object 300 to be held in the bucket 13. The target load weight Tr of the excavated object 300 for the dump truck body 230 is stored in the target load weight storing unit 140. The target load weight Tr is a unique value defined for the haul vehicle 220. The target weight setting unit 90 sets the target weight Wr on the basis of the target load weight Tr stored in the target load weight storing unit 140.

(Working Equipment Control Unit)

The working equipment control unit 100 controls the attitude of the bucket 13 so that the weight Wp estimated by the estimation unit 80 becomes the target weight Wr. The attitude of the bucket 13 includes the bucket angle $\theta bk$ indicating the angle of the bucket 13 with respect to the horizontal plane. When the bucket angle $\theta bk$ changes, the under-excavation load angle $\theta 1d$ changes. During the excavation work, the working equipment control unit 100 adjusts the bucket angle $\theta bk$ by controlling at least one of the lift cylinder 18 and the bucket cylinder 19. With the bucket angle $\theta bk$ adjusted, the under-excavation load angle $\theta 1d$ is adjusted. With the under-excavation load angle $\theta 1d$ adjusted, the weight Wp of the excavated object 300 is adjusted. During the excavation work, the under-excavation load angle calculating unit 82 calculates the under-excavation load angle $\theta 1d$ when the bucket angle $\theta bk$ is changing on the basis of the detection data of the first surface 310 when the bucket angle $\theta bk$ is changing. During the excavation work, the weight calculating unit 84 calculates the weight Wp of the excavated object 300 when the bucket angle $\theta bk$ is changing on the basis of the under-excavation load angle $\theta 1d$ when the bucket angle $\theta bk$ is changing. During the excavation work, the working equipment control unit 100 controls the bucket angle $\theta bk$ indicating the attitude of the bucket 13 on the basis of the detection data of the first surface 310 so that the weight Wp calculated by the weight calculating unit 84 becomes the target weight Wr.

The working equipment control unit 100 removes the bucket 13 from the natural ground 210 while maintaining the under-excavation load angle $\theta 1d$ and the bucket angle $\theta bk$ as of the time when the weight Wp has become the target weight Wr. This allows the difference between the weight Wa of the excavated object 300 after the excavation work held in the bucket 13 and the target weight Wr to be small.

(Characteristic Storing Unit)

The characteristic storing unit 120 stores characteristic data of the excavated object 300 including the angle of repose $\Theta 2$ and the density $\rho$. The characteristic storing unit 120 stores the characteristic data of the excavated object 300 calculated by the calibration unit 70.

(Bucket Data Storing Unit)

The bucket data storing unit 130 stores specification data or design data of the bucket 13 including the dimensions of the bucket 13.

(Target Load Weight Storing Unit)

The target load weight storing unit 140 stores the target load weight Tr of the excavated object 300 for the dump truck body 230.

(Actual Load Weight Storing Unit)

The actual load weight storing unit 150 stores an actual load weight Tp indicating an actual load weight of the excavated object 300 loaded on the dump truck body 230. The work modes including the excavation work M1 and the loading work M3 are performed a plurality of times for one haul vehicle 220. The weight calculating unit 84 adds the weight Wp of the excavated object 300 calculated in each of the plurality of times of excavation work M1 and stores the actual load weight Tp in the actual load weight storing unit 150.

<Control Method>

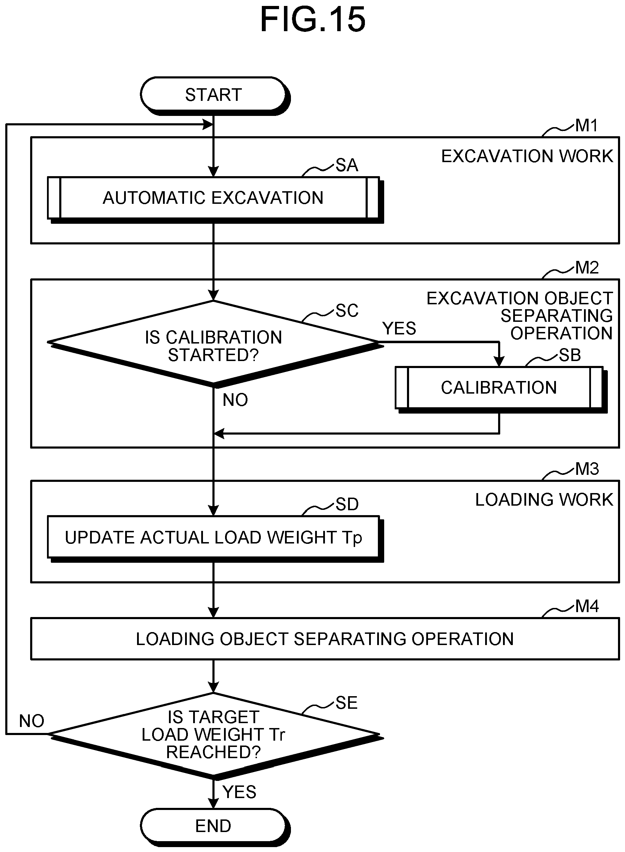

FIG. 15 is a flowchart illustrating a control method of the wheel loader 1 according to the embodiment. FIG. 15 is a flowchart illustrating the work of the wheel loader 1 with respect to one haul vehicle 220. As illustrated in FIG. 15, the wheel loader 1 performs the excavation work M1, the excavation object separating operation M2, the loading work M3, and the loading object separating operation M4. In the excavation work M1, automatic excavation (step SA) is performed. In the excavation object separating operation M2, calibration (step SB) is performed.

(Calibration)

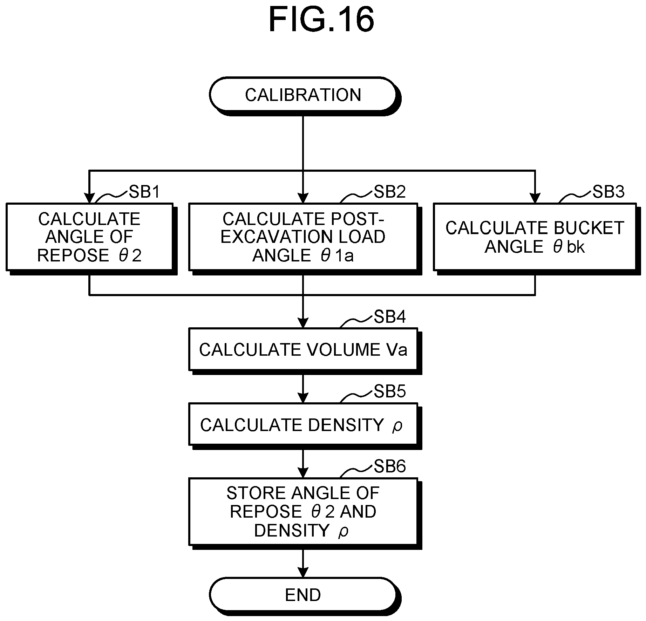

FIG. 16 is a flowchart illustrating a calibration method according to the embodiment. Calibration refers to processing of calculating characteristic data of the excavated object 300 on the basis of the excavated object 300 after the excavation work that is held in the bucket 13. The calibration is performed after the excavation work. The calibration is performed by the calibration unit 70.
The calibration is performed in the first work mode. In the excavation work M1 in the first work mode, the estimation unit 80 does not estimate the weight Wp. In the first excavation work M1, the working equipment control unit 100 causes the bucket 13 to hold an appropriate amount of the excavated object 300.
As illustrated in FIG. 15, the calibration unit 70 determines whether or not to start calibration in the excavation object separating operation M2 (step SC). In step SC, if it is determined to start calibration (step SC: Yes), the calibration unit 70 starts calibration in the excavation object separating operation M2. In step SC, if it is determined that the calibration is not started (Step SC: No), the excavation object separating operation M2 is performed without performing the calibration.
If the calibration is performed, the operator operates the calibration switch 26. When the calibration switch 26 is operated and the work determination unit 60 determines that the excavation work has been performed, the calibration is started.
The inclination sensor 30 detects the vehicle body inclination angle θa of the vehicle body 2. The boom angle sensor 31 detects the boom angle θb. The bucket angle sensor 32 detects the bellcrank angle θc. The weight measuring device 33 measures the weight Wa of the excavated object 300 after the excavation work. The shape sensor 34 detects the shape of the surface of the excavated object 300 after the excavation work.
As illustrated in FIG. 16, the repose angle calculating unit 72 calculates the angle of repose Θ2 of the excavated object 300 with respect to the horizontal plane on the basis of the detection data of the angle of the vehicle body 2 and the detection data of the second surface 320 of the excavated object 300 after the excavation work (step SB1).
The post-excavation load angle calculating unit 73 calculates the post-excavation load angle θ1a with respect to the horizontal plane on the basis of the detection data of the angle of the vehicle body 2 and the detection data of the first surface 310 of the excavated object 300 after the excavation work (step SB2).
The bucket angle calculating unit 74 calculates the bucket angle θbk on the basis of the detection data of the angle of the vehicle body 2, the detection data of the boom angle θb, and the detection data of the bellcrank angle θc (step SB3).
The volume calculating unit 75 calculates the volume Va of the excavated object 300 after the excavation work on the basis of the angle of repose Θ2 calculated in step SB1, the post-excavation load angle θ1a calculated in step SB2, the bucket angle θbk calculated in step SB3, and the dimensions of the bucket 13 stored in the bucket data storing unit 130 (step SB4). The volume calculating unit 75 calculates the volume Va of the excavated object 300 after the excavation work on the basis of Equations (1), (2), and (3) .

The density calculating unit 76 calculates the density $\rho$ of the excavated object 300 on the basis of the measurement data of the weight Wa of the excavated object 300 after the excavation work and the volume Va of the excavated object 300 calculated in step SB4 (step SB5). The density calculating unit 76 calculates the density $\rho$ of the excavated object 300 on the basis of Equation (4).

The characteristic storing unit 120 stores the angle of repose $\Theta2$ calculated in step SB1 and the density $\rho$ calculated in step SB5 (step SB6).

As illustrated in FIG. 15, after the excavation object separating operation M2 has been performed, the loading work M3 of loading the excavated object 300 held in the bucket 13 onto the dump truck body 230 is performed. The excavated object 300 held in the bucket 13 is loaded onto the dump truck body 230.

In the loading work M3, the actual load weight Tp stored in the actual load weight storing unit 150 is updated. The calibration unit 70 transmits the weight Wa of the excavated object 300 calculated in the calibration (step SB) to the actual load weight storing unit 150. The actual load weight storing unit 150 updates the actual load weight Tp (step SD).

In a case where the loading work M3 has not yet been performed on the haul vehicle 220, the actual load weight Tp is equal to the weight Wa. In a case where the excavated object 300 having the load weight Tb is already loaded on the dump truck body 230 of the haul vehicle 220, the actual load weight Tp is updated from the load weight Tb to a load weight [Tb + Wa].

(Excavation Method)

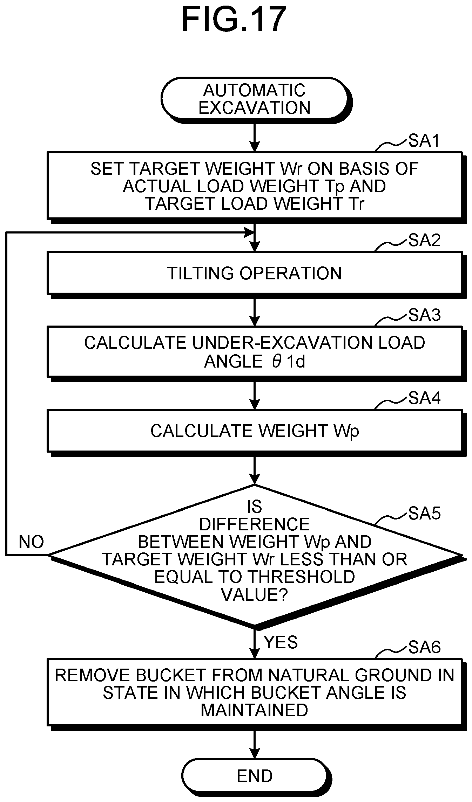

FIG. 17 is a flowchart illustrating an excavation method according to the embodiment. In FIG. 17, the excavation work M1 in a second and subsequent work modes is illustrated. In the excavation work M1 in the second and subsequent work modes, the weight Wp is estimated by the estimation unit 80. The angle of repose $\Theta2$ and the density $\rho$ are stored in the characteristic storing unit 120.

The target weight setting unit 90 sets the target weight Wr on the basis of the actual load weight Tp stored in the actual load weight storing unit 150 and the target load weight Tr stored in the target load weight storing unit 140 (step SA1).

For example, in a case where the difference between the target load weight Tr and the actual load weight Tp is defined as $\Delta T$, and it is determined that the target load weight Tr is reached in four more times of the loading work M3, the target weight setting unit 90 sets the target weight Wr to, for example, [$\Delta T/4$].

When the excavation work M1 is started and at least a part of the bucket 13 is inserted into the natural ground 210, the working equipment control unit 100 causes the bucket 13 to perform the tilting operation (step SA2). When the bucket 13 performs the tilting operation, the bucket angle $\theta bk$ changes.

The inclination sensor 30 detects the vehicle body inclination angle $\theta a$ of the vehicle body 2. The boom angle sensor 31 detects the boom angle $\theta b$. The bucket angle sensor 32 detects the bellcrank angle $\theta c$. The shape sensor 34 detects the shape of the surface of the excavated object 300 during the excavation work.

The under-excavation load angle calculating unit 82 calculates the under-excavation load angle $\theta1d$ with respect to the horizontal plane on the basis of the detection data of the angle of the vehicle body 2 and the detection data of the first surface 310 of the excavated object 300 during the excavation work (step SA3).

The weight calculating unit 84 calculates the weight Wp of the excavated object 300 after the excavation work on the basis of the under-excavation load angle $\theta1d$ calculated in step SA3, the bucket angle $\theta bk$, and the angle of repose $\Theta2$ and the density $\rho$ stored in the characteristic storing unit 120 (step SA4). The weight calculating unit 84 calculates the weight Wp on the basis of Equations (5), (6), (7), and (8).

The working equipment control unit 100 determines whether or not the difference between the weight Wp calculated in step SA4 and the target weight Wr set in step SA1 is less than or equal to a predetermined threshold value (step SA5).

If it is determined in step SA5 that the difference between the weight Wp and the target weight Wr is less than or equal to the threshold value, that is, if it is determined that the weight Wp and the target weight Wr match or approximate to each other (step SA5: Yes), the working equipment control unit 100 removes the bucket 13 from the natural ground 210 while maintaining the bucket angle $\theta bk$ as of the time when it is determined that the difference between the weight Wp and the target weight Wr is less than or equal to the threshold value (step SA6). As a result, one time of excavation work M1 is completed.

If it is determined in step SA5 that the difference between the weight Wp and the target weight Wr is not less than or equal to the threshold value, that is, if it is determined that the weight Wp and the target weight Wr are different (step SA5: No), the working equipment control unit 100 continues the tilting operation of the bucket 13 (step SA2).

When the bucket angle $\theta bk$ changes by the tilting operation, the under-excavation load angle $\theta1d$ also changes. The under-excavation load angle calculating unit 82 calculates the changing under-excavation load angle $\theta1d$ (step

SA3). The weight calculating unit 84 calculates the weight Wp of the excavated object 300 on the basis of the changing under-excavation load angle θ1d (step SA4). The processing from step SA2 to step SA4 is continued until it is determined in step SA4 that the difference between the weight Wp and the target weight Wr is less than or equal to the threshold value.

As illustrated in FIG. 15, after the excavation work M1 ends and the excavation object separating operation M2 ends, the loading work M3 of loading the excavated object 300 held in the bucket 13 into the dump truck body 230 is performed. The excavated object 300 held in the bucket 13 is loaded onto the dump truck body 230.

In the loading work M3, the actual load weight Tp stored in the actual load weight storing unit 150 is updated. The estimation unit 80 transmits the weight Wp of the excavated object 300 estimated in the excavation work M1 to the actual load weight storing unit 150. The actual load weight storing unit 150 updates the actual load weight Tp (step SD).

In a case where the excavated object 300 having the load weight Tb is already loaded on the dump truck body 230 of the haul vehicle 220, the actual load weight Tp is updated from the load weight Tb to a load weight [Tb + Wp].

As illustrated in FIG. 15, after the loading work M3 and the loading object separating operation M4 are finished, the target weight setting unit 90 determines whether or not the actual load weight Tp has reached the target load weight Tr (step SE).

In step SE, if it is determined that the actual load weight Tp has reached the target load weight Tr (step SE: Yes), the work on one haul vehicle 220 ends.

If it is determined in step SE that the actual load weight Tp has not reached the target load weight Tr (step SE: No), the work is continued until the actual load weight Tp reaches the target load weight Tr.

Note that, in the embodiment, the calibration is performed in the first work mode, and estimation of the weight Wp is performed in the second and subsequent work modes. The calibration may be performed in a plurality of times of work modes, and estimation of the weight Wp may be performed in a work mode after completion of the calibration. In a case where the calibration is executed a plurality of times and a plurality of angles of repose Θ2 and a plurality of densities ρ are calculated, the characteristic storing unit 120 may store an average value of the plurality of angles of repose Θ2 or may store the most recent angle of repose Θ2. Similarly, the characteristic storing unit 120 may store an average value of the plurality of densities ρ or may store the most recent density p.

<Effects>

As described above, in the embodiment, the first surface 310 of the excavated object 300 is detected by the shape sensor 34 while the bucket 13 is performing the excavation work on the natural ground 210. The under-excavation load angle calculating unit 82 calculates the under-excavation load angle θ1d with respect to the horizontal plane on the basis of the detection data of the angle of the vehicle body 2 and the detection data of the first surface 310. By calculating the under-excavation load angle θ1d, the weight calculating unit 84 can estimate the weight Wp of the excavated object 300 held in the bucket 13 after the excavation work on the basis of the under-excavation load angle θ1d. The estimation unit 80 can grasp the weight Wp of the excavated object 300 held in the bucket 13 during the excavation work. By grasping the weight Wp of the excavated object 300 during the excavation work, the working equipment control unit 100 can control the working equipment 6 during the excavation work in such a manner as to reduce the difference between the weight Wp and the target weight Wr. As a result, the weight Wp of the excavated object 300 for the haul vehicle 220 is automatically adjusted, and the excavated object 300 is loaded onto the haul vehicle 220 at the target load weight Tr. Therefore, the loading work by the wheel loader 1 is optimized.

The first surface 310 of the excavated object 300 refers to a surface of the excavated object 300 positioned outside the surface 210S of the natural ground 210 during the excavation work. As a result, the shape sensor 34 can detect the first surface 310.

In the embodiment, the first surface 310 is formed in such a manner as to be continuous with the upper end 13B of the bucket 13. The second surface 320 is formed in such a manner as to be continuous with the blade tip 13A of the bucket 13. The position of the first surface 310 and the position of the second surface 320 are specified on the basis of the upper end 13B and the blade tip 13A. Therefore, the shape sensor 34 can detect each of the first surface 310 and the second surface 320.

The characteristic data of the excavated object 300 is stored in the characteristic storing unit 120. As a result, the weight calculating unit 84 can calculate the weight Wp of the excavated object 300 on the basis of the under-excavation load angle θ1d and the characteristic data of the excavated object 300.

The calibration unit 70 calculates the characteristic data on the basis of the excavated object 300 excavated in the excavation work M1. As a result, the characteristic data is calculated in a state in which a decrease in productivity at the work site is suppressed.

The repose angle calculating unit 72 can calculate the angle of repose Θ2, which is one piece of the characteristic data, on the basis of the detection data of the angle of the vehicle body 2 and the detection data of the second surface 320 of the excavated object 300 after the excavation work.

The density calculating unit 76 can calculate the density ρ, which is one piece of the characteristic data, on the basis of the weight Wa and the volume Va of the excavated object 300 after the excavation work.

The work determination unit 60 can determine whether or not the bucket 13 of the wheel loader 1 is performing the excavation work. The estimation unit 80 can estimate the weight Wp of the excavated object 300 during the excavation work. The calibration unit 70 can calculate the characteristic data of the excavated object 300 after the excavation work.

[Second Embodiment]

A second embodiment will be described. In the following description, the same or equivalent components as those of the above embodiment are denoted by the same symbols, and description of the components is simplified or omitted.

In the first embodiment described above, an example in which the working equipment 6 performs the excavation work in the automatic excavation mode has been described. In a second embodiment, an example in which the working equipment 6 performs excavation work by manual excavation operation will be described.

<Control System>

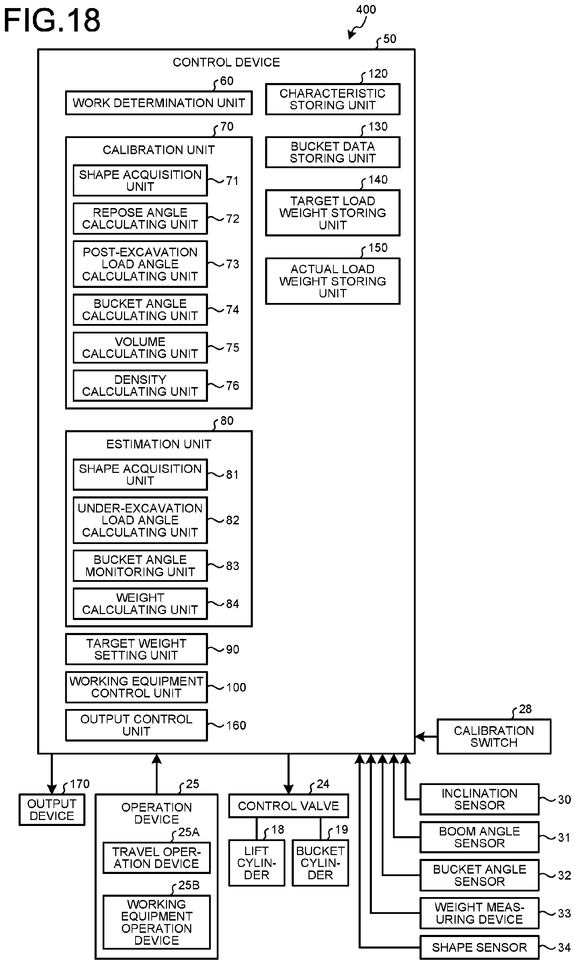

FIG. 18 is a functional block diagram illustrating a control system 400 of a wheel loader 1 according to the embodiment. The control system 400 includes an output control unit 160 and an output device 170 in addition to the control system 40 according to the above embodiment.

A control device 50 includes the output control unit 160. The output control unit 160 causes the output device 170 to output the weight Wp of the excavated object 300 estimated by an estimation unit 80.

The output device 170 outputs output data transmitted from the output control unit 160. The output device 170 outputs the weight Wp of the excavated object 300 estimated by the estimation unit 80. Examples of the output device 170 include a display device and an audio output device. Examples of the display device includes a flat panel display such as a liquid crystal display (LCD) or an organic electroluminescence display (OELD). The output device 170 is disposed inside the cab 4 of the wheel loader 1.

The working equipment 6 operates on the basis of an operation signal of a working equipment operation device 25B. The working equipment operation device 25B is operated by an operator. In excavation work M1, the output control unit 160 causes the output device 170 to output the weight Wp of the excavated object 300 estimated by the estimation unit 80. In the excavation work M1, the operator operates the working equipment operation device 25B so that the weight Wp becomes the target weight Wr while confirming the weight Wp of the excavated object 300 output from the output device 170. When the working equipment operation device 25B is operated and the bucket angle $\theta bk$ and the under-excavation load angle $\theta 1d$ change, the weight Wp of the excavated object 300 estimated by the estimation unit 80 also changes. The output device 170 outputs the changing weight Wp of the excavated object 300 in real time. The operator can operate the working equipment operation device 25B so that the weight Wp becomes the target weight Wr while confirming the weight Wp of the changing excavated object 300 in real time.

<Excavation Method>

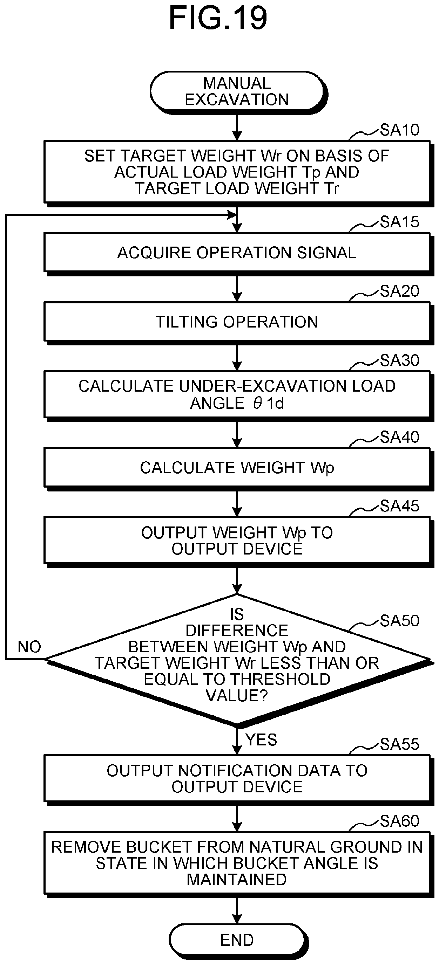

FIG. 19 is a flowchart illustrating an excavation method according to the embodiment. The target weight setting unit 90 sets the target weight Wr on the basis of the actual load weight Tp and the target load weight Tr according to the above embodiment (step SA10).

In the excavation work M1, the operator operates the working equipment operation device 25B so that the bucket 13 performs the tilting operation in a state in which at least a part of the bucket 13 is inserted in the natural ground 210. When the working equipment operation device 25B is operated, an operation signal is output from the working equipment operation device 25B. The working equipment control unit 100 acquires the operation signal from the working equipment operation device 25B (step SA15) .

The working equipment control unit 100 causes the bucket 13 inserted in the natural ground 210 to perform the tilting operation on the basis of the operation signal from the working equipment operation device 25B (step SA20).

According to the above embodiment, the under-excavation load angle calculating unit 82 calculates the under-excavation load angle $\theta 1d$ with respect to the horizontal plane on the basis of the detection data of the angle of the vehicle body 2 and the detection data of the first surface 310 (step SA30).

According to the above embodiment, the weight calculating unit 84 calculates the weight Wp of the excavated object 300 on the basis of the under-excavation load angle $\theta 1d$ calculated in step SA30 (step SA40).

The output control unit 160 causes the output device 170 to output the weight Wp of the excavated object 300 calculated in step SA40 (step SA45).

The output control unit 160 determines whether or not a difference between the weight Wp calculated in step SA40 and the target weight Wr set in step SA10 is less than or equal to the predetermined threshold value (step SA50).

If it is determined in step SA50 that the difference between the weight Wp and the target weight Wr is less than or equal to the threshold value, that is, if it is determined that the weight Wp and the target weight Wr match or approximate to each other (step SA50: Yes), the output control unit 160 causes the output device 170 to output notification data indicating that the difference between the weight Wp estimated by the estimation unit 80 and the target weight Wr is less than or equal to the threshold value (step SA55).

With the notification data output to the output device 170, the operator can recognize that the weight Wp and the target weight Wr match or approximate to each other. The operator operates the working equipment operation device 25B so that the bucket 13 is removed from the natural ground 210 in a state in which the bucket angle θbk, as of the time when the weight Wp and the target weight Wr match or approximate each other, is maintained. The working equipment control unit 100 removes the bucket 13 from the natural ground 210 on the basis of the operation signal from the working equipment operation device 25B (step SA60).

If it is determined in step SA50 that the difference between the weight Wp and the target weight Wr is not less than or equal to the threshold value, that is, if it is determined that the weight Wp and the target weight Wr are different (step SA50: No), no notification data is output. The operator operates the working equipment operation device 25B until the notification data is output to the output device 170.

<Effects>

As described above, according to the embodiment, the output control unit 160 causes the output device 170 to output the weight Wp of the excavated object 300 estimated by the estimation unit 80. With the weight Wp of the excavated object 300 during the excavation work output to the output device 170, the operator can operate the working equipment operation device 25B so that the difference between the weight Wp and the target weight Wr becomes small while checking the output device 170. As a result, the excavated object 300 is loaded onto the haul vehicle 220 at the target load weight Tr.

The output control unit 160 causes the output device 170 to output the notification data indicating that the difference between the weight Wp estimated by the estimation unit 80 and the target weight Wr is less than or equal to the threshold value. With the notification data output to the output device 170, the operator can recognize that the weight Wp and the target weight Wr match or approximate to each other during the excavation work.

<Modification>

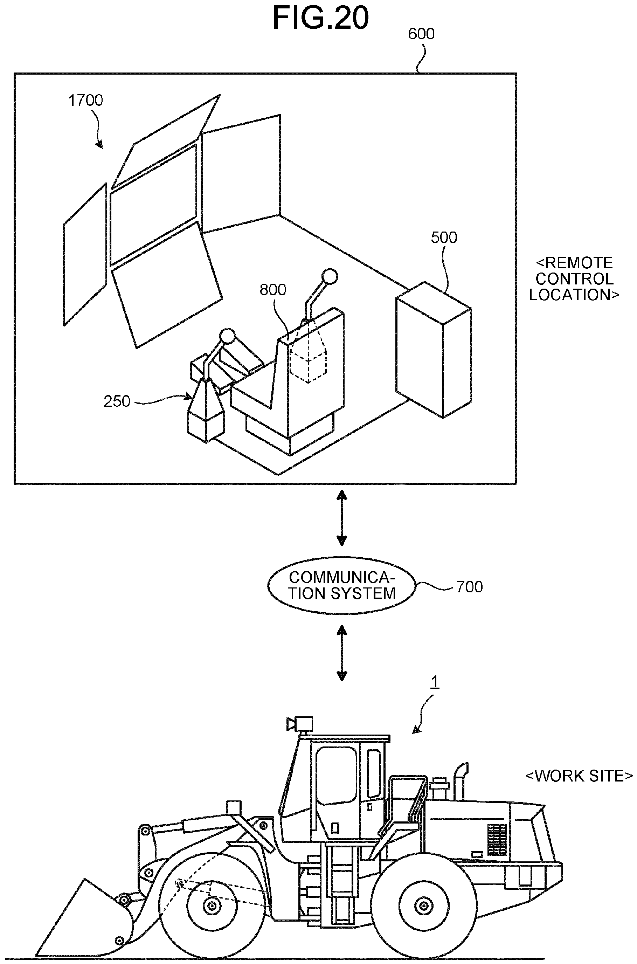

FIG. 20 is a diagram illustrating a modification of the control system 400 of the wheel loader 1 according to the embodiment. In the embodiment, the output device 170 is disposed inside the cab 4 of the wheel loader 1. As illustrated in FIG. 20, an output device 1700 may be disposed outside the wheel loader 1.

In the example illustrated in FIG. 20, the control system 400 includes a remote control system. The control system 400 remotely operates the wheel loader 1 operating at a work site.

At least a part of the control system 400 is disposed in a remote operation area 600. The remote operation area 600 is installed at a remote control location away from the work site. The control system 400 includes a remote operation device 250, the output device 1700, and a control device 500.

The remote operation device 250 is disposed in the remote operation area 600. The remote operation device 250 is operated by an operator in the remote operation area 600. The operator can operate the remote operation device 250 while seated at a seat 800.

The output device 1700 is disposed in the remote operation area 600. The output device 1700 is a display device. The output device 1700 displays an image of the work site. It may be difficult for the operator in the remote operation area 600 to recognize the situation of the work site directly visually. The operator in the remote operation area 600 can check the situation of the work site via the output device 1700. The operator operates the remote operation device 250 while viewing the image of the work site displayed on the output device 1700. The wheel loader 1 is remotely operated by the remote operation device 250. When the remote operation device 250 is operated, the wheels 5 and the working equipment 6 each operate.

The control device 500 is disposed in the remote operation area 600. The control device 500 includes a computer system.

The control device 50 of the wheel loader 1 and the control device 500 in the remote operation area 600 communicate with each other via a communication system 700. Examples of the communication system 700 include the Internet, a local area network (LAN), a mobile phone communication network, and a satellite communication network.

The output control unit 160 of the wheel loader 1 transmits the weight Wp of the excavated object 300 estimated by the estimation unit 80 to the control device 500 via the communication system 700. The control device 500 causes the output device 1700 to display the weight Wp of the excavated object 300 estimated by the estimation unit 80. The operator in the remote operation area 600 can operate the remote operation device 250 so that the difference between the weight Wp and the target weight Wr is reduced while checking the output device 1700. As a result, the excavated object 300 is loaded onto the haul vehicle 220 at the target load weight Tr.

Note that, in the example illustrated in FIG. 20, the control device 500 may have the function of the estimation unit 80. The detection data of the first surface 310 by the shape sensor 34 is transmitted to the control device 500 via the communication system 700. The control device 500 the estimation unit 80 can estimate the weight Wp on the basis of the detection data of the first surface 310.

[Third Embodiment]

A third embodiment will be described. In the following description, the same or equivalent components as those of the above embodiment are denoted by the same symbols, and description of the components is simplified or omitted.

In the embodiment, it is based on the premise that the second surface 320 of the excavated object 300 is detected by the shape sensor 34. The first surface 310 may be detected by the shape sensor 34, and the second surface 320 may be detected by another shape sensor different from the shape sensor 34.

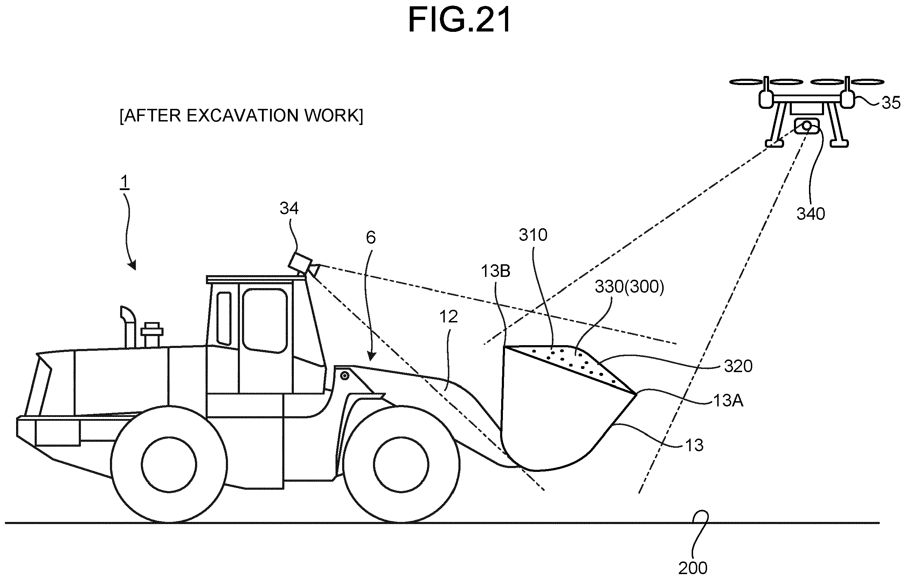

FIG. 21 is a diagram illustrating the excavated object 300 detected by the shape sensor 34 and a shape sensor 340 according to the embodiment. As illustrated in FIG. 21, after the excavation work, the first surface 310 may be detected by the shape sensor 34 mounted on the wheel loader 1, and the second surface 320 may be detected by the shape sensor 340 disposed externally to the wheel loader 1. The detection data of the second surface 320 detected by the shape sensor 340 is transmitted to the control device 50 of the wheel loader 1.

In the embodiment, the shape sensor 340 is mounted on a separate traveling body 35 other than the wheel loader 1. An example of the traveling body 35 is an unmanned aerial vehicle (UAV).

Note that the shape sensor 340 may not be mounted on the traveling body 35. The shape sensor 340 may be installed on the ground 200, for example.

Note that the shape sensor 34 may be disposed externally to the wheel loader 1. The shape sensor 34 disposed externally to the wheel loader 1 may detect the first surface 310, and the shape sensor 340 may detect the second surface 320.

Note that the shape sensor 34 may be omitted. The shape sensor 340 disposed externally to the wheel loader 1 may detect both the first surface 310 and the second surface 320.

[Other Embodiments]

In the embodiment, it is based on the premise that the weight Wa of the excavated object 300 is measured by the weight measuring device 33 included in the wheel loader 1. The weight Wa of the excavated object 300 may be measured by a weight measuring device included in the haul vehicle 220. When the excavated object 300 is loaded onto the dump truck body 230 by the bucket 13, a load applied to the haul vehicle 220 changes. The weight measuring device provided in the haul vehicle 220 measures a first load applied to the haul vehicle 220 before the excavated object 300 is loaded onto the dump truck body 230 and a second load applied to the haul vehicle 220 after the excavated object 300 is loaded onto the dump truck body 230. The measurement data of the weight measuring device provided in the haul vehicle 220 is transmitted to the control device 50 of the wheel loader 1. The weight Wa of the excavated object 300 held in the bucket 13 corresponds to a difference between the first load and the second load. The density calculating unit 76 can calculate the density $\rho$ on the basis of the weight Wa of the excavated object 300 calculated on the basis of the difference between the first load and the second load and the volume Va of the excavated object 300.

In the embodiment, it is based on the premise that the calibration (step SB) is performed in some of the work modes. The calibration may be performed separately from the working modes.

In the embodiment, it is based on the premise that the characteristic data of the excavated object 300 is calculated on the basis of the excavated object 300 after the excavation work. The characteristic data of the excavated object 300 may be calculated on the basis of the excavated object 300 that is not held in the bucket 13. For example, the characteristic data of the excavated object 300 may be calculated in an experimental facility or an evaluation facility. In addition, in a case where the characteristic data of the excavated object 300 is known, the processing of calculating the characteristic data of the excavated object 300 may be omitted. Before the excavation work M1, it is only required that the characteristic data of the excavated object 300 (natural ground 210) be stored in the characteristic storing unit 120.

In the embodiment, it is based on the premise that the excavation object is the natural ground 210. The excavation object may not be the natural ground 210. Examples of the excavation object may be, for example, a rocky mountain, coal, feed, or a wall face. A rocky mountain refers to a mountain including rocks or stones.

In the embodiment, it is based on the premise that the loading object is the haul vehicle 220. The loading object may not be the haul vehicle 220. Examples of the loading object include at least one of a hopper, a belt conveyor, or a crusher.

In the embodiment, it is based on the premise that the loading machine 1 is the wheel loader. The loading machine 1 may be a hydraulic shovel having a front-loading type working equipment. The loading machine 1 may be a hydraulic shovel having a backhoe-type working equipment in which an opening of a bucket faces backward in excavation work.

Reference Signs List

| | |
|---|---|
| 1 | WHEEL LOADER (LOADING MACHINE) |
| 2 | VEHICLE BODY |
| 2F | VEHICLE BODY FRONT PART |
| 2R | VEHICLE BODY REAR PART |
| 3 | ARTICULATED STEERING MECHANISM |
| 4 | CAB |
| 5 | WHEEL |
| 5F | FRONT WHEEL |
| 5R | REAR WHEEL |
| 6 | WORKING EQUIPMENT |
| 11 | ARTICULATION CYLINDER |
| 12 | BOOM |
| 13 | BUCKET |
| 13A | BLADE TIP |
| 13B | UPPER END |
| 13C | RIGHT END |
| 13D | LEFT END |
| 14 | BELLCRANK |
| 15 | BUCKET LINK |
| 16 | BRACKET |
| 17 | BRACKET |
| 18 | LIFT CYLINDER |
| 19 | BUCKET CYLINDER |
| 20 | POWER SOURCE |
| 21 | PTO |
| 22 | POWER TRANSMISSION DEVICE |
| 23 | HYDRAULIC PUMP |
| 24 | CONTROL VALVE |
| 25 | OPERATION DEVICE |
| 25A | DRIVE SYSTEM OPERATION DEVICE |
| 25B | WORKING EQUIPMENT OPERATION DEVICE |
| 26 | CALIBRATION SWITCH |
| 30 | INCLINATION SENSOR |
| 31 | BOOM ANGLE SENSOR |
| 32 | BUCKET ANGLE SENSOR |
| 33 | WEIGHT MEASURING DEVICE |
| 34 | SHAPE SENSOR |
| 35 | TRAVELING BODY |
| 40 | CONTROL SYSTEM |
| 50 | CONTROL DEVICE |
| 51 | PROCESSOR |
| 52 | MAIN MEMORY |
| 53 | STORAGE |
| 54 | INTERFACE |
| 60 | WORK DETERMINATION UNIT |
| 70 | CALIBRATION UNIT |
| 71 | SHAPE ACQUISITION UNIT |
| 72 | REPOSE ANGLE CALCULATING UNIT |
| 73 | POST-EXCAVATION LOAD ANGLE CALCULATING UNIT |
| 74 | BUCKET ANGLE CALCULATING UNIT |

| | |
|---|---|
| 75 | VOLUME CALCULATING UNIT |
| 76 | DENSITY CALCULATING UNIT |
| 80 | ESTIMATION UNIT |
| 81 | SHAPE ACQUISITION UNIT |
| 82 | UNDER-EXCAVATION LOAD ANGLE CALCULATING UNIT |
| 83 | BUCKET ANGLE MONITORING UNIT |
| 84 | WEIGHT CALCULATING UNIT |
| 90 | TARGET WEIGHT SETTING UNIT |
| 100 | WORKING EQUIPMENT CONTROL UNIT |
| 120 | CHARACTERISTIC STORING UNIT |
| 130 | BUCKET DATA STORING UNIT |
| 131 | BOTTOM PLATE PORTION |
| 132 | BACK PLATE PORTION |
| 133 | UPPER PLATE PORTION |
| 134 | RIGHT PLATE PORTION |
| 135 | LEFT PLATE PORTION |
| 136 | OPENING |
| 140 | TARGET LOAD WEIGHT STORING UNIT |
| 150 | ACTUAL LOAD WEIGHT STORING UNIT |
| 160 | OUTPUT CONTROL UNIT |
| 170 | OUTPUT DEVICE |
| 200 | GROUND |
| 210 | NATURAL GROUND (EXCAVATION OBJECT) |
| 210S | SURFACE |
| 220 | HAUL VEHICLE |
| 230 | DUMP TRUCK BODY (LOADING OBJECT) |
| 250 | REMOTE OPERATION DEVICE |
| 253 | FORWARD-REVERSE OPERATION DEVICE |
| 254 | BOOM OPERATION UNIT |
| 255 | BUCKET OPERATION UNIT |
| 300 | EXCAVATED OBJECT |
| 310 | FIRST SURFACE |
| 320 | SECOND SURFACE |
| 330 | EXPOSED PORTION |
| 340 | SHAPE SENSOR |
| 400 | CONTROL SYSTEM |
| 500 | CONTROL DEVICE |
| 600 | REMOTE OPERATION AREA |
| 700 | COMMUNICATION SYSTEM |
| 800 | SEAT |
| 1700 | OUTPUT DEVICE |
| A1 | CROSS-SECTIONAL AREA |
| A2 | CROSS-SECTIONAL AREA |
| A3 | CROSS-SECTIONAL AREA |
| Aa | CROSS-SECTIONAL AREA |
| Ad | CROSS-SECTIONAL AREA |
| AXa | ROTATION SHAFT |
| AXb | ROTATION SHAFT |
| AXc | ROTATION SHAFT |
| AXd | ROTATION SHAFT |
| AXe | ROTATION SHAFT |
| AXf | ROTATION SHAFT |
| CXf | ROTATION SHAFT |
| CXr | ROTATION SHAFT |
| E1 | LINE |
| E2 | LINE |
| H | WIDTH |
| L | LENGTH |

M1      EXCAVATION WORK
M2      EXCAVATION OBJECT SEPARATING OPERATION
M3      LOADING WORK
M4      LOADING OBJECT SEPARATING OPERATION
Tb      LOAD WEIGHT
Tp      ACTUAL LOAD WEIGHT
Tr      TARGET LOAD WEIGHT
Va      VOLUME
Vp      VOLUME
Wa      WEIGHT
Wp      WEIGHT
Wr      TARGET WEIGHT
$\theta 1$      LOAD ANGLE
$\theta 1a$     POST-EXCAVATION LOAD ANGLE
$\theta 1d$     UNDER-EXCAVATION LOAD ANGLE
$\theta 2$      ANGLE OF REPOSE
$\theta 3$      OPENING ANGLE
$\theta a$      VEHICLE BODY INCLINATION ANGLE
$\theta b$      BOOM ANGLE
$\theta bk$     BUCKET ANGLE
$\theta bk1$    FIRST ANGLE
$\theta bk2$    SECOND ANGLE
$\theta c$      BELLCRANK ANGLE
$\rho$      DENSITY

**Claims**

1.  A control system of a loading machine, the loading machine having working equipment including a bucket, the control system comprising:

    a control device,
    wherein the control device
    detects a first surface of an excavated object excavated by the bucket during excavation work,
    calculates an under-excavation load angle indicating an angle of the first surface with respect to a horizontal plane on the basis of detection data of the first surface, and
    estimates a weight of the excavated object on the basis of the under-excavation load angle.

2.  The control system of the loading machine according to claim 1,
    wherein the first surface is positioned outside a surface of an excavation object during the excavation work.

3.  The control system of the loading machine according to claim 1 or 2,

    wherein the bucket includes a blade tip, an upper end facing the blade tip, and an opening defined between the blade tip and the upper end, and
    the first surface is formed in such a manner as to be continuous with the upper end.

4.  The control system of the loading machine according to any one of claims 1 to 3,

    wherein the control device
    stores characteristic data of the excavated object, and
    estimates the weight of the excavated object on the basis of the under-excavation load angle and the characteristic data.

5.  The control system of the loading machine according to claim 4,

    wherein the control device
    calculates the characteristic data on the basis of the excavated object held in the bucket after the excavation work, and
the control device stores the characteristic data that has been calculated.

6. The control system of the loading machine according to claim 5,
   wherein the characteristic data includes an angle of repose of the excavated object.

7. The control system of the loading machine according to claim 6,

   wherein the control device
   detects a second surface of the excavated object held in the bucket after the excavation work, and
   calculates the angle of repose with respect to the horizontal plane on the basis of detection data of the second surface.

8. The control system of the loading machine according to claim 7,

   wherein the characteristic data includes a density of the excavated object,
   the control device
   detects the first surface of the excavated object held in the bucket after the excavation work,
   calculates a post-excavation load angle indicating an angle of the first surface with respect to the horizontal plane on the basis of the detection data of the first surface,
   calculates a bucket angle indicating an angle of the bucket with respect to the horizontal plane on the basis of detection data of an angle of a vehicle body of the loading machine supporting the working equipment and detection data of an angle of the working equipment,
   calculates a volume of the excavated object held in the bucket on the basis of the angle of repose, the post-excavation load angle, the bucket angle, and dimensions of the bucket, and
   calculates the density on the basis of weight data of the excavated object held in the bucket and the volume.

9. The control system of the loading machine according to any one of claims 1 to 8, comprising:
   a work determination unit that determines whether or not the bucket is performing the excavation work on the basis of a traveling direction of the loading machine and an attitude of the working equipment.

10. The control system of the loading machine according to any one of claims 1 to 9,

    wherein the control device
    controls the attitude of the bucket such that the weight, which is estimated, reaches a target weight.

11. The control system of the loading machine according to claim 10,
    wherein the attitude of the bucket includes a bucket angle indicating an angle of the bucket with respect to the horizontal plane.

12. The control system of the loading machine according to claim 10 or 11,

    wherein the control device
    stores a target load weight of the excavated object for a loading object, and
    sets the target weight on the basis of the target load weight.

13. The control system of the loading machine according to any one of claims 1 to 9,

    wherein the control device
    outputs the weight that has been estimated to an output device.

14. The control system of the loading machine according to claim 13,

    wherein the control device
    outputs notification data indicating that a difference between the weight that has been estimated and a target weight is less than or equal to a threshold value.

15. The control system of the loading machine according to claim 13 or 14,

wherein the output device is disposed at an operator's cab of the loading machine.

16. A loading machine comprising
the control system of the loading machine according to any one of claims 1 to 15.

17. A control method of a loading machine having working equipment including a bucket, the control method comprising:

detecting a first surface of an excavated object excavated by the bucket during excavation work;
calculating an under-excavation load angle indicating an angle of the first surface with respect to a horizontal plane on the basis of detection data of the first surface;
estimating a weight of the excavated object on the basis of the under-excavation load angle; and
outputting an estimation result of the weight.

FIG.1

# FIG.2

H

136    133    13B    13

13C

L

134

$\theta 3$

135

13D

13A    131    132

+Z (UP)

-Y (BACKWARD)

+X (RIGHT)

-X (LEFT)

+Y (FORWARD)

-Z (DOWN)

# FIG.3

+Z (UP)

-Y (BACKWARD)          +Y (FORWARD)

-Z (DOWN)

# FIG.4

# FIG.5

EP 4 183 938 A1

# FIG.6

210

230

220

M3

M2

M1

M4

13(6)

1

# FIG.7

[M1:EXCAVATION WORK]

<TRAVEL FORWARD>

(A)

[M1:EXCAVATION WORK]

<TRAVEL FORWARD>

<TILTING OPERATION>

(B)

[M2:EXCAVATION OBJECT SEPARATING OPERATION]

<TRAVEL BACKWARD>

(C)

# FIG.8

[M3:LOADING WORK]

(A)

<TRAVEL FORWARD>

1    34    12    6    13    300

220    230

200

[M3:LOADING WORK]

(B)

<TRAVEL FORWARD>    13    <DUMPING OPERATION>

1    34    12    6    220    230    300

200

[M4:LOADING OBJECT SEPARATING OPERATION]

(C)

<TRAVEL BACKWARD>

1    34    6    12    13    220    230

200

33

# FIG.9

[UNDER EXCAVATION WORK]

<TILTING OPERATION>

# FIG.10

[AFTER EXCAVATION WORK]

EP 4 183 938 A1

# FIG.11

(A)

310
13B
$\theta 1 (\theta 1a)$
330(300)
136
13
320
13C
13A
$\theta 2$
131
$\theta bk (= \theta bk1)$

(B)

310
13B
$\theta 1 (\theta 1a)$
330(300)
136
13
320
13C
13A
$\theta 2$
131
$\theta bk (= \theta bk2)$

# FIG.12

CONTROL DEVICE — 50 — 40

WORK DETERMINATION UNIT — 60

CHARACTERISTIC STORING UNIT — 120

## CALIBRATION UNIT — 70

SHAPE ACQUISITION UNIT — 71

REPOSE ANGLE CALCULATING UNIT — 72

POST-EXCAVATION LOAD ANGLE CALCULATING UNIT — 73

BUCKET ANGLE CALCULATING UNIT — 74

VOLUME CALCULATING UNIT — 75

DENSITY CALCULATING UNIT — 76

BUCKET DATA STORING UNIT — 130

TARGET LOAD WEIGHT STORING UNIT — 140

ACTUAL LOAD WEIGHT STORING UNIT — 150

## ESTIMATION UNIT — 80

SHAPE ACQUISITION UNIT — 81

UNDER-EXCAVATION LOAD ANGLE CALCULATING UNIT — 82

BUCKET ANGLE MONITORING UNIT — 83

WEIGHT CALCULATING UNIT — 84

TARGET WEIGHT SETTING UNIT — 90

WORKING EQUIPMENT CONTROL UNIT — 100

CALIBRATION SWITCH — 26

OPERATION DEVICE — 25

TRAVEL OPER-ATION DEVICE — 25A

WORKING EQUIPMENT OPERATION DEVICE — 25B

CONTROL VALVE — 24

LIFT CYLIN-DER — 18

BUCKET CYLIN-DER — 19

INCLINATION SENSOR — 30

BOOM ANGLE SENSOR — 31

BUCKET ANGLE SENSOR — 32

WEIGHT MEAS-URING DEVICE — 33

SHAPE SENSOR — 34

# FIG.13

# FIG.14

EP 4 183 938 A1

# FIG.15

START

M1 EXCAVATION WORK

SA AUTOMATIC EXCAVATION

M2 EXCAVATION OBJECT SEPARATING OPERATION

SC IS CALIBRATION STARTED?

YES

SB CALIBRATION

NO

M3 LOADING WORK

SD UPDATE ACTUAL LOAD WEIGHT Tp

M4 LOADING OBJECT SEPARATING OPERATION

SE IS TARGET LOAD WEIGHT Tr REACHED?

NO

YES

END

# FIG.16

```
        ┌──────────────────┐
        │   CALIBRATION    │
        └──────────────────┘
                 │
    ┌────────────┼────────────────────────────┐
    │            │                             │
   ─SB1         ─SB2                          ─SB3
    ▼            ▼                             ▼
┌──────────┐ ┌──────────────────┐  ┌──────────────────┐
│CALCULATE │ │CALCULATE POST-   │  │CALCULATE BUCKET  │
│ANGLE OF  │ │EXCAVATION LOAD   │  │ANGLE θ bk        │
│REPOSE θ2 │ │ANGLE θ1a         │  │                  │
└──────────┘ └──────────────────┘  └──────────────────┘
    │            │                             │
    └────────────┼─────────────────────────────┘
                 │
                ─SB4
                 ▼
        ┌──────────────────┐
        │CALCULATE VOLUME Va│
        └──────────────────┘
                 │
                ─SB5
                 ▼
        ┌──────────────────┐
        │CALCULATE DENSITY ρ│
        └──────────────────┘
                 │
                ─SB6
                 ▼
        ┌──────────────────┐
        │STORE ANGLE OF    │
        │REPOSE θ2 AND     │
        │DENSITY ρ         │
        └──────────────────┘
                 │
                 ▼
        ┌──────────────────┐
        │       END        │
        └──────────────────┘
```

# FIG.17

```
        ┌─────────────────────┐
        │      AUTOMATIC       │
        │     EXCAVATION      │
        └──────────┬──────────┘
                   │                        ⌇SA1
        ┌──────────▼──────────────────────┐
        │ SET TARGET WEIGHT Wr ON BASIS OF │
        │  ACTUAL LOAD WEIGHT Tp AND       │
        │     TARGET LOAD WEIGHT Tr        │
        └──────────┬───────────────────────┘
                   │                        ⌇SA2
        ┌──────────▼──────────────────────┐
        │       TILTING OPERATION          │
        └──────────┬───────────────────────┘
                   │                        ⌇SA3
        ┌──────────▼──────────────────────┐
        │ CALCULATE UNDER-EXCAVATION LOAD  │
        │         ANGLE θ1d                 │
        └──────────┬───────────────────────┘
                   │                        ⌇SA4
        ┌──────────▼──────────────────────┐
        │      CALCULATE WEIGHT Wp         │
        └──────────┬───────────────────────┘
                   │
              ╱────▼────╲                   ⌇SA5
   NO     ╱    IS          ╲
 ◄───────  DIFFERENCE
          ╲ BETWEEN WEIGHT Wp AND ╱
          ╲ TARGET WEIGHT Wr LESS THAN OR ╱
           ╲ EQUAL TO THRESHOLD ╱
              ╲   VALUE?   ╱
                   │ YES                    ⌇SA6
        ┌──────────▼──────────────────────┐
        │ REMOVE BUCKET FROM NATURAL GROUND IN │
        │  STATE IN WHICH BUCKET ANGLE IS  │
        │          MAINTAINED              │
        └──────────┬───────────────────────┘
                   │
        ┌──────────▼──────────┐
        │         END         │
        └─────────────────────┘
```

# FIG.18

# FIG.19

```
┌─────────────────────────┐
│        MANUAL           │
│      EXCAVATION         │
└─────────────────────────┘
            │
            ▼                              ⌐SA10
┌─────────────────────────────────────┐
│   SET TARGET WEIGHT Wr ON BASIS OF  │
│      ACTUAL LOAD WEIGHT Tp AND      │
│       TARGET LOAD WEIGHT Tr         │
└─────────────────────────────────────┘
            │
            ▼                              ⌐SA15
┌─────────────────────────────────────┐
│        ACQUIRE OPERATION SIGNAL     │
└─────────────────────────────────────┘
            │
            ▼                              ⌐SA20
┌─────────────────────────────────────┐
│           TILTING OPERATION         │
└─────────────────────────────────────┘
            │
            ▼                              ⌐SA30
┌─────────────────────────────────────┐
│   CALCULATE UNDER-EXCAVATION LOAD   │
│            ANGLE θ1d                 │
└─────────────────────────────────────┘
            │
            ▼                              ⌐SA40
┌─────────────────────────────────────┐
│          CALCULATE WEIGHT Wp        │
└─────────────────────────────────────┘
            │
            ▼                              ⌐SA45
┌─────────────────────────────────────┐
│         OUTPUT WEIGHT Wp TO         │
│           OUTPUT DEVICE             │
└─────────────────────────────────────┘
            │
            ▼                              ⌐SA50
          ◇IS◇
   DIFFERENCE
BETWEEN WEIGHT Wp AND
TARGET WEIGHT Wr LESS THAN OR
   EQUAL TO THRESHOLD
        VALUE?
   NO ──────┘           │ YES
                        ▼                  ⌐SA55
┌─────────────────────────────────────┐
│     OUTPUT NOTIFICATION DATA TO     │
│           OUTPUT DEVICE             │
└─────────────────────────────────────┘
            │
            ▼                              ⌐SA60
┌─────────────────────────────────────┐
│ REMOVE BUCKET FROM NATURAL GROUND IN│
│   STATE IN WHICH BUCKET ANGLE IS    │
│            MAINTAINED               │
└─────────────────────────────────────┘
            │
            ▼
         ┌───────┐
         │  END  │
         └───────┘
```

# FIG.20

# FIG.21

[AFTER EXCAVATION WORK]

EP 4 183 938 A1

## INTERNATIONAL SEARCH REPORT

| | International application No. |
|---|---|
| | **PCT/JP2021/033395** |

**A.    CLASSIFICATION OF SUBJECT MATTER**

*E02F 9/20*(2006.01)i
FI:   E02F9/20 M

According to International Patent Classification (IPC) or to both national classification and IPC

**B.    FIELDS SEARCHED**

Minimum documentation searched (classification system followed by classification symbols)

E02F9/20

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2017-172316 A (SUMITOMO HEAVY IND., LTD.) 28 September 2017 (2017-09-28) entire text, all drawings | 1-17 |
| A | JP 8-49265 A (CATERPILLAR INC.) 20 February 1996 (1996-02-20) entire text, all drawings | 1-17 |
| A | WO 2018/174154 A1 (SUMITOMO HEAVY IND., LTD.) 27 September 2018 (2018-09-27) entire text, all drawings | 1-17 |
| A | JP 63-194033 A (KOMATSU LTD.) 11 August 1988 (1988-08-11) entire text, all drawings | 1-17 |
| A | US 2010/0161185 A1 (CATERPILLAR INC.) 24 June 2010 (2010-06-24) entire text, all drawings | 1-17 |

☐ Further documents are listed in the continuation of Box C.          ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **26 October 2021** | **09 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/033395**

| Patent document cited in search report | | | Publication date (day/month/year) | Patent family member(s) | | | Publication date (day/month/year) |
|---|---|---|---|---|---|---|---|
| JP | 2017-172316 | A | 28 September 2017 | (Family: none) | | | |
| JP | 8-49265 | A | 20 February 1996 | US | 5493798 | A | |
| | | | | entire text, all drawings | | | |
| | | | | DE | 19521722 | A1 | |
| WO | 2018/174154 | A1 | 27 September 2018 | US | 2020/0011029 | A1 | |
| | | | | entire text, all drawings | | | |
| | | | | EP | 3604689 | A1 | |
| | | | | CN | 110382788 | A | |
| | | | | KR | 10-2019-0126792 | A | |
| JP | 63-194033 | A | 11 August 1988 | (Family: none) | | | |
| US | 2010/0161185 | A1 | 24 June 2010 | WO | 2010/075334 | A2 | |
| | | | | entire text, all drawings | | | |

Form PCT/ISA/210 (patent family annex) (January 2015)

48

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019203381 A